# EUROPEAN PATENT APPLICATION

(11) **EP 4 671 901 A1**
(43) Date of publication of application: **31.12.2025**
(21) Application number: 23924205.0
(22) Date of filing: 30.11.2023
(51) Int. Cl.: G05D 1/43, E02F 9/20

(54) **AUTONOMOUS TRAVEL SYSTEM**

(30) Priority: 24.02.2023 JP 2023027361
(71) Applicant: Hitachi Construction Machinery Co., Ltd., Tokyo 110-0015 (JP)
(72) Inventor: OBARA Hiroki, Tokyo 100-8280 (JP); ICHINOSE Masanori, Tokyo 100-8280 (JP); UOTSU Shinichi, Tsuchiura-shi, Ibaraki 300-0013 (JP)
(74) Representative: MERH-IP Matias Erny Reichl Hoffmann Patentanwälte PartG mbB
(86) International application number: PCT/JP2023/042967
(87) International publication number: WO 2024/176561

(57) **Abstract**

A controller configuring an autonomous travel system computes an arrival predicted time that is a time required for a conveyance vehicle to arrive at the position of an obstacle, on the basis of the position of the obstacle, and the position and the travelling speed of the conveyance vehicle, computes the predicted position of the other vehicle after the arrival predicted time elapses on the basis of the position and the travelling speed of the other vehicle, and the arrival predicted time, sets a travel lane as an avoidance area when it is determined that the other vehicle is present in the vicinity of the obstacle after the arrival predicted time elapses, sets both the travel lane and a lane adjacent to the travel lane as an avoidance area when it is determined that the other vehicle is not present in the vicinity of the obstacle after the arrival predicted time elapses, and generates an avoidance route for the conveyance vehicle to avoid the obstacle in the avoidance area on the basis of the position of the conveyance vehicle, the position of the obstacle, and the avoidance area.

## Description

### Technical Field

The present invention relates to an autonomous travel system.

### Background Art

In open-pit mines and the like, a dump truck (hereinafter, referred to as an "unmanned vehicle") that autonomously travels without an operator (hereinafter, referred to as a "driver" in some cases) on board has been known. In order to increase the conveyance amount of earth and sand, and ores, which corresponds to the amount of production of mines, an unmanned vehicle responsible for conveyance needs to increase the travel distance during operation hours. However, there are obstacles in mines such as a mining machine for maintaining the road surface and rocks overflowed from an unmanned vehicles during conveyance. Where an obstacle is detected in the advancing direction, the unmanned vehicle can prevent contact with the obstacle by stopping before the obstacle. However, stopping the unmanned vehicle leads to a decrease in the amount of production. Therefore, it is preferable to cause the unmanned vehicle to avoid the obstacle without stopping in order to improve the amount of production.

A vehicle controller including a function of generating a route for avoiding contact between a vehicle and an obstacle is known from the past (see Patent Document 1). The vehicle controller described in Patent Document 1 includes: an obstacle specifying section that computes a distance and a relative speed between an own vehicle and an obstacle; a travel path specifying section that selects a travel route of the own vehicle on the basis of the distance and the relative speed; and a travel route generation section that generates a target travel route on the basis of the selected travel route. In a case where an obstacle in a first lane is sensed while travelling in a second lane, the travel path specifying section selects any one of a first route in which the own vehicle travelling in the second lane is headed to the lane center of the first lane after passing the obstacle, a second route in which the own vehicle travelling in the second lane is headed to the lane center of the first lane from the second lane and is then headed to the second lane to avoid the obstacle after travelling in the lane center of the first lane, and a third route in which the own vehicle travelling in the second lane is headed from the second lane to a travel route nearer an obstacle avoidance direction relative to the lane center of the first lane and is then headed to the second lane to avoid the obstacle after travelling in the travel route nearer the obstacle avoidance direction.

### Prior Art Document

### Patent Document

Patent Document 1: JP-2021-70379-A

### Summary of the Invention

### Problem to be Solved by the Invention

In the technique described in Patent Document 1, when an obstacle is present on a boundary line opposite to an oncoming lane among boundary lines of the travel lane of the own vehicle, the obstacle can be avoided by using the vicinity of the boundary line between the travel lane of the own vehicle and the oncoming lane. However, when an obstacle such as a rock fallen from an unmanned vehicle is present in the vicinity of the boundary line between the travel lane of the own vehicle and the oncoming lane in mines and the like, the technique described in Patent Document 1 cannot be used.

An object of the present invention is to provide an autonomous travel system capable of continuing travelling of a conveyance vehicle by causing the conveyance vehicle to avoid an obstacle in a case where the obstacle is present in the vicinity of a boundary line between a travel lane of the conveyance vehicle and a lane adjacent to the travel lane.

### Means for Solving the Problem

An autonomous travel system according to an aspect of the present invention includes a controller for controlling a conveyance vehicle that can autonomously travel along a travel route. The controller is configured: to compute an arrival predicted time that is a time required for the conveyance vehicle to arrive at a position of an obstacle on the basis of the position of the obstacle, and a position and a travelling speed of the conveyance vehicle when the obstacle is positioned in a travel lane of the conveyance vehicle; to compute a predicted position of another vehicle after the arrival predicted time elapses on the basis of a position and a travelling speed of the another vehicle present around the conveyance vehicle and the arrival predicted time; to determine whether or not the another vehicle is present in a vicinity of the obstacle after the arrival predicted time elapses on the basis of the position of the obstacle and the predicted position of the another vehicle; to set the travel lane as an avoidance area and not to set a lane adjacent to the travel lane as an avoidance area when it is determined that the another vehicle is present in the vicinity of the obstacle after the arrival predicted time elapses; to set both the travel lane and the lane adjacent to the travel lane as an avoidance area when it is determined that the another vehicle is not present in the vicinity of the obstacle after the arrival predicted time elapses, and to generate an avoidance route as the travel route for the conveyance vehicle to avoid the obstacle in the avoidance area on the basis of the position of the conveyance vehicle, the position of the obstacle, and the avoidance area.

### Advantages of the Invention

According to the present invention, it is possible to provide an autonomous travel system capable of continuing travelling of a conveyance vehicle by causing the conveyance vehicle to avoid an obstacle in a case where the obstacle is present in the vicinity of a boundary line between a travel lane of the conveyance vehicle and a lane adjacent to the travel lane.

### Brief Description of the Drawings

FIG. 1 is a schematic view for depicting a work site of an open-pit mine, and depicts an unmanned vehicle including an autonomous travel system according to a first embodiment.
FIG. 2 is a diagram for depicting a configuration of the unmanned vehicle.
FIG. 3 is a diagram for depicting a travel route of the unmanned vehicle travelling in a conveyance path.
FIG. 4A is a diagram for depicting an example of a first table of map information.
FIG. 4B is a diagram for depicting an example of a second table of the map information.
FIG. 5 is a flowchart for depicting an example of a flow of computation processing of obstacle information executed by an obstacle information computing section.
FIG. 6 is a schematic plan view for depicting an own vehicle travelling in a travel lane and the other vehicle (oncoming vehicle) travelling in an oncoming lane.
FIG. 7 is a flowchart for depicting an example of a flow (main flow) of main computation processing of a vehicle controller.
FIG. 8 is a flowchart for depicting an example of a flow of decision processing of an avoidance area executed by an avoidance route generation section.
FIG. 9 is a flowchart for depicting an example of a flow of generation processing of an avoidance route executed by the avoidance route generation section.
FIG. 10A is a diagram for depicting a spatial distance corresponding to the avoidance area, and depicts a case where the travel lane and the oncoming lane are set as the avoidance area.
FIG. 10B is a diagram for depicting a spatial distance corresponding to the avoidance area, and depicts a case where only the travel lane is set as the avoidance area.
FIG. 11A is a diagram for depicting a movement limit distance corresponding to the avoidance area, and depicts a case where the travel lane and the oncoming lane are set as the avoidance area.
FIG. 11B is a diagram for depicting a movement limit distance corresponding to the avoidance area, and depicts a case where only the travel lane is set as the avoidance area.
FIG. 12 is a schematic view for depicting a work site of an open-pit mine, and depicts a control station including an autonomous travel system according to a second embodiment.
FIG. 13 is a diagram for depicting configurations of the unmanned vehicle, the mining machine, and the control station.
FIG. 14 is a flowchart for depicting an example of a flow of decision processing of an avoidance area executed by a control server according to the second embodiment.

### Modes for Carrying Out the Invention

Embodiments of the present invention will be described with reference to the drawings. In the following description, specific examples of the contents of the present invention are depicted, the present invention is not limited to these descriptions, and various changes and modifications can be made by those skilled in the art within the scope of the technical idea disclosed in the specification. In addition, in all the drawings for describing the present invention, constitutional elements having the same functions are denoted by the same reference numerals, and the repeated description thereof will be omitted in some cases.

### <First Embodiment>

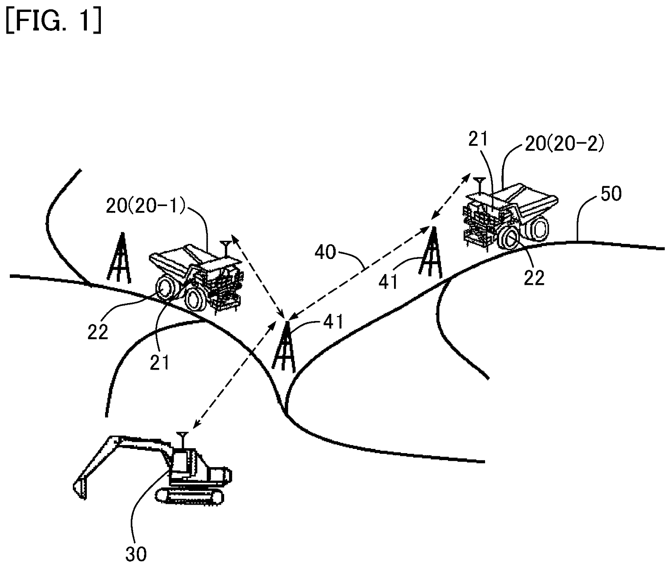

An autonomous travel system according to a first embodiment of the present invention will be described with reference to FIG. 1 to FIG. 11B. FIG. 1 is a schematic view for depicting a work site of an open-pit mine, and depicts an unmanned vehicle 20 including the autonomous travel system according to the first embodiment. As depicted in FIG. 1, at the work site of the open-pit mine, one or more mining machines 30 that perform excavation work of earth and sand, ores, and the like, loading work for loading excavated objects into the unmanned vehicle 20, maintenance work for a conveyance path 50, and the like, and one or more unmanned vehicles 20 that convey the cargo such as earth and sand, and ores loaded from the mining machines 30 work in cooperation with each other. It should be noted that in the drawing, the respective unmanned vehicles 20 capable of autonomous travel are depicted as 20-1, 20-2, and the like.

The unmanned vehicle 20 travels in the conveyance path 50 set based on the shape of the work site. The unmanned vehicle 20 is a conveyance vehicle capable of autonomous travel without an operator on board. The unmanned vehicle 20 is, for example, a dump truck including a vehicle body 21 provided with a vessel for loading a cargo, and four wheels 22 provided at the vehicle body 21. It should be noted that in the first embodiment, a case where all the unmanned vehicles (dump trucks) 20 present at the work site have the same specifications (for example, the same maximum loading amount) and have the same functions will be described as an example. The mining machine 30 is, for example, a hydraulic excavator including a work device having a boom, an arm, and a bucket, a machine body to which the work device is attached, and a crawler provided to the machine body.

The unmanned vehicles 20, and the unmanned vehicles 20 and the mining machine 30 are configured to be capable of communicating with each other through a wireless communication line 40. Specifically, a plurality of wireless base stations 41 is installed at the work site, and the unmanned vehicles 20, and the unmanned vehicles 20 and the mining machine 30 perform transmission and reception to/from each other via these wireless base stations 41.

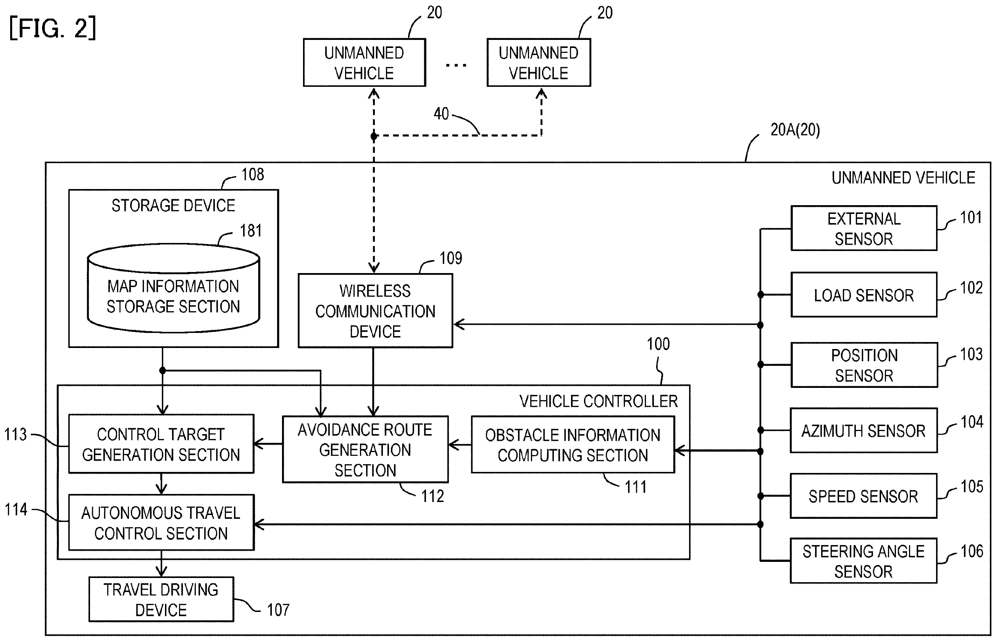

FIG. 2 is a diagram for depicting a configuration of the unmanned vehicle 20. As depicted in FIG. 2, the unmanned vehicle 20 includes a vehicle controller 100, an external sensor 101, a load sensor 102, a position sensor 103, an azimuth sensor 104, a speed sensor 105, a steering angle sensor 106, a travel driving device 107, a storage device 108, and a wireless communication device 109 as hardware configurations. The autonomous travel system according to the first embodiment includes the vehicle controller 100 and the storage device 108. Hereinafter, the unmanned vehicle 20 that includes these pieces of hardware and is to be controlled by the vehicle controller 100 is defined as an own vehicle 20A.

The wireless communication device 109 is a communication device capable of wireless communication with the wireless base station 41 configuring a part of the wireless communication line 40, and has a communication interface including a communication antenna having, for example, a bandwidth of 2.1 GHz or the like as a receiving bandwidth.

The travel driving device 107 steers the wheels 22 and rotates the wheels 22 on the basis of a travel control command from the vehicle controller 100 to make the vehicle body 21 travel. The travel driving device 107 includes, for example, an engine, a generator driven by the engine, a travel motor (electrically driven motor) for driving the wheels 22 by the electric power generated by the generator, a steering device for steering the wheels 22, and a brake device for applying braking force to the wheels 22.

The travel motor accelerates the vehicle body 21 by applying driving force to the wheels 22. The steering device has a steering motor (electrically driven motor) for changing a steering angle. The brake device includes an electric brake device and a mechanical brake device. The electric brake device is a regenerative brake device for reducing a travelling speed by using regenerative torque generated by the travel motor as braking force. The mechanical brake device is a friction type mechanical brake device capable of generating braking force larger than that of the electric brake device. The mechanical brake device is, for example, a disc brake device provided in the wheel of each wheel 22, and reduces a travelling speed by using frictional force as braking force.

The vehicle controller 100 is configured with a computer including a processing device such as a CPU (Central Processing Unit), a volatile memory what is called a RAM (Random Access Memory), a nonvolatile memory such as a ROM (Read Only Memory), an input/output interface, and other peripheral circuits. These pieces of hardware operate software in cooperation with each other to realize a plurality of functions. It should be noted that the vehicle controller 100 may be configured with one computer or a plurality of computers.

A program capable of executing various computations and data (threshold values used in determination processing, the width and the lowest ground clearance of the unmanned vehicle 20A, the spatial distance between the wheels 22, and the like) necessary for various computations are stored in the nonvolatile memory. That is, the nonvolatile memory is a storage medium (storage device) capable of reading a program that realizes the functions of the present embodiment. The volatile memory is a storage medium (storage device) that temporarily stores computation results obtained from the processing device and signals input from the input/output interface. The processing device is a device for developing a program stored in the nonvolatile memory into the volatile memory to execute computations, and performs predetermined computation processing on data taken in from the input/output interface, the nonvolatile memory, and the volatile memory in accordance with the program. An input section of the input/output interface converts signals input from the various sensors 101 to 106 and the wireless communication device 109 into data that can be computed by the processing device. In addition, an output section of the input/output interface generates an output signal according to the computation result obtained from the processing device, and outputs the signal to the travel driving device 107, the wireless communication device 109, and the like.

The external sensor 101 is a sensor for recognizing an object around the unmanned vehicle 20. The external sensor 101 measures a relative three-dimensional position between the own vehicle 20A and an object (for example, an obstacle, the mining machine 30, and the other unmanned vehicle 20) presents around the own vehicle 20A. In addition, the external sensor 101 may have a function of measuring the distance between the own vehicle 20A and the object on the basis of the measured relative position. The external sensor 101 is, for example, a LIDAR (Light Detection And Ranging) capable of measuring a relative three-dimensional position between the external sensor 101 and the object by using a laser beam. It should be noted that a millimeter wave radar, a stereo camera, and the like may be adopted for the external sensor 101.

The load sensor 102 is for acquiring the loading amount of the own vehicle 20A. The load sensor 102 senses, for example, the load acting on a suspension of the own vehicle 20A or the pressure of hydraulic operating fluid in a hydraulic cylinder (suspension cylinder), and computes the loading amount of the own vehicle 20A on the basis of the sensed result.

The position sensor 103 is for acquiring the position of the own vehicle 20A (the position of the vehicle body 21), and the azimuth sensor 104 is for acquiring the azimuth of the own vehicle 20A (the direction of the vehicle body 21). The position sensor 103 and the azimuth sensor 104 have, for example, antennas (hereinafter, referred to as GNSS antennas) for a plurality of GNSSs (Global Navigation Satellite Systems), and positioning computing devices for computing the position of the vehicle body 21 represented by real coordinates of a three-dimensional space and an azimuth angle that is an angle from the reference azimuth, on the basis of satellite signals (GNSS radio waves) from the plurality of positioning satellites received by the GNSS antennas. The position of the vehicle body 21 is represented by, for example, the positional coordinates of the vehicle body 21 in a geographic coordinate system (global coordinate system).

It should be noted that the position sensor 103 and the azimuth sensor 104 may be configured with a single GNSS antenna and a positioning computing device. In this case, the azimuth sensor 104 computes the azimuth angle from the locus of the position of the vehicle body 21. In addition, the azimuth sensor 104 may include, for example, an IMU (Inertial Measurement Unit) and a computing device for computing an azimuth angle from a time change of angular acceleration information sensed by the IMU.

The speed sensor 105 is for acquiring the travelling speed (the moving speed of the vehicle body 21) V of the own vehicle 20A. The speed sensor 105 is, for example, a wheel speed sensor for sensing the rotational speed of the wheels 22. It should be noted that the speed sensor 105 may be a device for computing a speed from a time change of the position of the vehicle body 21 computed by the position sensor 103.

The steering angle sensor 106 is for acquiring the steering angle of the own vehicle 20A. The steering angle sensor 106 is, for example, an angle sensor such as an encoder attached to a steering device.

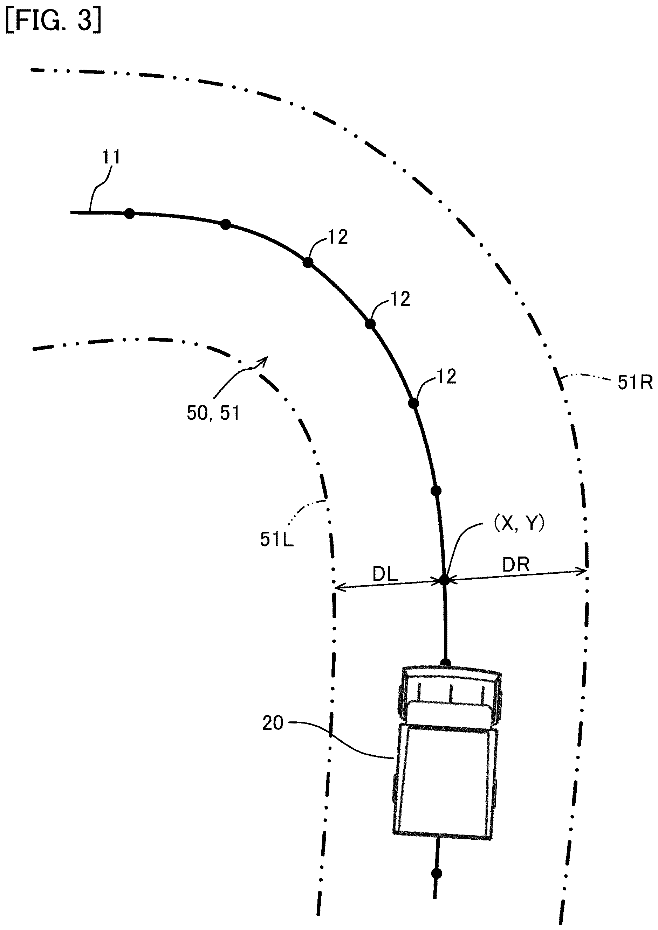

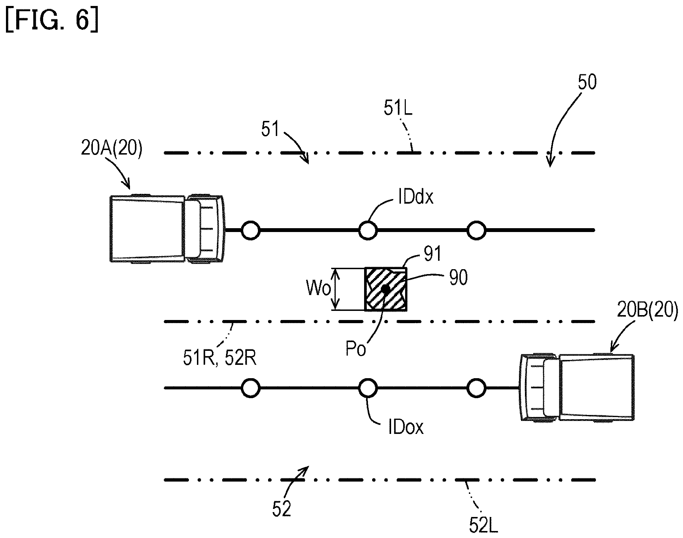

The vehicle controller 100 controls the operation of the own vehicle 20A. FIG. 3 is a diagram for depicting a travel route 11 of the unmanned vehicle 20 travelling in the conveyance path 50. FIG. 3 depicts an example in which the conveyance path 50 is configured with only a travel lane 51 in which the unmanned vehicle 20 travels, but the conveyance path 50 is configured with the travel lane 51 and an oncoming lane 52 (see FIG. 6) adjacent to the travel lane 51 in some cases. As depicted in FIG. 3, the vehicle controller 100 outputs a travel control command to the travel driving device 107 in order to allow the own vehicle 20A to autonomously travel along the travel route 11. The travel control command includes a brake operation amount, an accelerator operation amount, and a steering angle operation amount.

The travel route 11 is specified by a plurality of nodes 12. Information (hereinafter, also referred to as map information) related to the plurality of nodes 12 is stored in the storage device 108 as described later. The travel route 11 is data indicating curves in the travel lane 10, and the nodes 12 are data indicating coordinates on the travel route 11. The vehicle controller 100 may allow the own vehicle 20A to autonomously travel so as to minimize the deviation from the travel route 11, or may allow the own vehicle 20A to autonomously travel so as to pass over the nodes 12. In the illustrated example, the travel route 11 is a curve passing the center of the travel lane 10, but the travel route 11 may be provided at a position deviating from the center of the travel lane 10 to either the left or the right. In addition, in the illustrated example, the nodes 12 are arranged at equal intervals on the travel route 11, but may be arranged at unequal intervals.

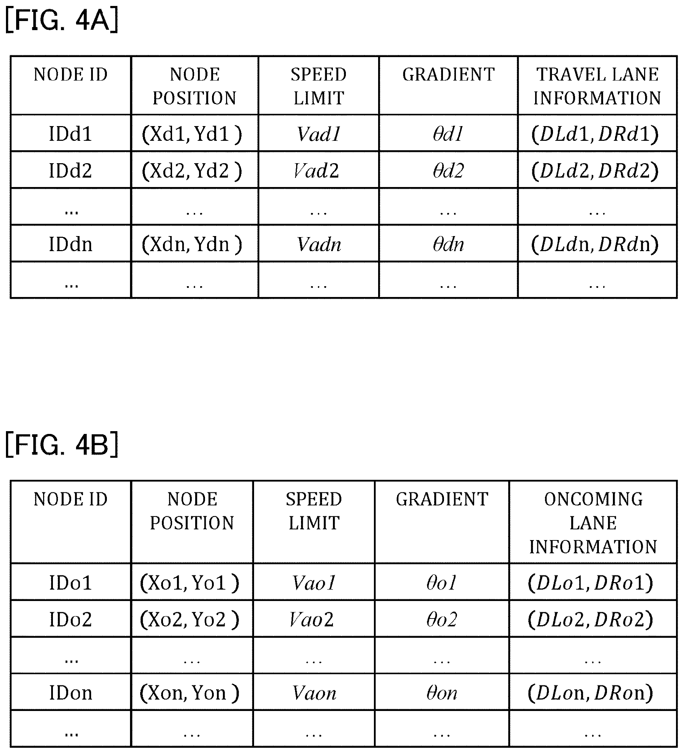

The storage device 108 depicted in FIG. 2 is a nonvolatile storage medium capable of reading and writing data, and stores an OS (Operating System), various control programs, application programs, databases, and the like. The storage device 108 includes a map information storage section 181. The map information storage section 181 stores map information depicted in FIG. 4A and FIG. 4B in a table format.

FIG. 4A is a diagram for depicting an example of a first table of the map information, and FIG. 4B is a diagram for depicting an example of a second table of the map information. As depicted in FIG. 4A and FIG. 4B, the map information includes information defining the positions of the nodes defining the travel route 11, gradients, speed limits, the width of the lane, and the like. FIG. 4A is map information related to a route from the loading point to the unloading point, and FIG. 4B is map information related to a route from the unloading point to the loading point. It should be noted that although the first table and the second table are separately described, the first table and the second table may be provided as a continuous data table.

Where the own vehicle 20A is travelling along the travel route 11 defined by the node positions in the first table (see FIG. 4A), the first table is map information related to the travel lane 51, and the second table (see FIG. 4B) is map information related to the oncoming lane 52. Hereinafter, the other unmanned vehicle 20 travelling in the oncoming lane 52 adjacent to the lane in which the own vehicle 20A travels is defined as an oncoming vehicle 20B. In addition, in the present specification, the control, operation, and the like when the own vehicle 20A is travelling along the travel route 11 defined by the node positions in the first table will be representatively described. It should be noted that when the own vehicle 20A is travelling along the travel route 11 defined by the node positions in the second table (see FIG. 4B), the second table is map information related to the travel lane, and the first table (see FIG. 4A) is map information related to the oncoming lane.

In the first table, a node ID, a node position, a speed limit, a gradient, and travel lane information are defined for each node. In the second table, a node ID, a node position, a speed limit, a gradient, and travel lane information are defined for each node.

The node ID is information for identifying the node, and the node position is information for defining the route shape of the travel route 11. The node position is specified by, for example, coordinates in a site coordinate system in which the coordinate origin is set at the work site. The site coordinate system is a two-dimensional orthogonal coordinate system consisting of X and Y coordinates. It should be noted that the node position may be specified by coordinates in a geographic coordinate system. The coordinates in the site coordinate system and the coordinates in the geographic coordinate system can be converted to each other.

The speed limit of the travel route 11 is defined in consideration of at least one of the curvature and the gradient of the travel route 11. It should be noted that the curvature of the travel route 11 can be obtained as the reciprocal of the radius of a circle having a predetermined number of nodes 12 on the circumference. In addition, the curvature of the travel route 11 may be obtained in advance by a manned travel test or the like as the reciprocal of the turning radius of the travel locus computed from a time change of the azimuth angle of the vehicle body 21 or the position of the vehicle body 21 when the unmanned vehicle 20 is allowed to travel along the travel route 11.

The gradient of the travel route 11 is an inclination of the travel route 11 relative to the horizontal direction. The lane information (travel lane information and oncoming lane information) is data for defining a lane that is an area where the unmanned vehicle 20 can travel. At a work site of an open-pit mine, lane forming lines (a lane boundary line, a center line, and the like) to form lanes, which are strip-shaped areas for traffic on a roadway, are not physically present in many cases. Therefore, in the present specification, an area which is defined by the lane information stored in the storage device 108 and in which the unmanned vehicle 20 can travel is defined as a lane. It should be noted that the lane includes the travel lane 51 that is a lane in which the own vehicle 20A travels and the oncoming vehicle 52 that is a lane in which the oncoming vehicle 20B travels.

In the present embodiment, in a case where the unmanned vehicle 20 is positioned at a node 12, distances DL and DR in the left-right direction orthogonal to the advancing direction of the unmanned vehicle 20 from the node 12 are stored in a map information storage section 181 as lane information.

An example of the travel lane 51 will be described with reference to FIG. 3. In the present embodiment, a virtual lane forming line 51L on the left side of the travel lane (travelable area) is defined by the distance DL in the left direction from the nodes 12. Similarly, a virtual lane forming line 51R on the right side of the travel lane (travelable area) is defined by the distance DR in the right direction from the nodes 12. In other words, the lane forming line 51L corresponds to a virtual line obtained by connecting points separated by the distance DL in the left direction from each of the plurality of nodes 12 configuring the travel route 11 of the travel lane 51. Similarly, the lane forming line 51R corresponds to a virtual line obtained by connecting points separated by the distance DR in the right direction from each of the plurality of nodes 12 configuring the travel route 11 of the travel lane 51. It should be noted that in the present embodiment, the lane forming line 51R on the right side functions as a center line separating the travel lane 51 of the own vehicle from the oncoming lane 52 (see FIG. 6). It should be noted that the same applies to the oncoming lane 52 depicted in FIG. 6. That is, lane forming lines 52L and 52R of the oncoming lane 52 are defined by the distances DL and DR that are oncoming lane information.

Details of the functions of the vehicle controller 100 will be described with reference to FIG. 2. FIG. 2 depicts a functional block diagram of the vehicle controller 100. As depicted in FIG. 2, the vehicle controller 100 functions as an obstacle information computing section 111, an avoidance route generation section 112, a control target generation section 113, and an autonomous travel control section 114 by executing, by the processing device, programs stored in the nonvolatile memory.

The obstacle information computing section 111 detects the presence of an obstacle 90 in the advancing direction of the own vehicle 20A on the basis of the sensed result of the external sensor 101. The obstacle information computing section 111 computes the position of the obstacle, the height of the obstacle, and the lateral width of the obstacle as information on the obstacle present in the advancing direction of the own vehicle 20A on the basis of the sensed result of the external sensor 101. The position of the obstacle includes the position of the center of the obstacle and the positions of the upper, lower, left, and right ends of the obstacle. The height of the obstacle is computed on the basis of the positions of the upper and lower ends of the obstacle. The lateral width of the obstacle is computed on the basis of the positions of the left and right ends of the obstacle.

The avoidance route generation section 112 generates an avoidance route as a new travel route for avoiding the obstacle on the basis of the information on the obstacle. It should be noted that "generates an avoidance route" means setting a plurality of nodes configuring the avoidance route. The control target generation section 113 generates a control target including a target speed Vt, which is a target value of the travelling speed, and a target steering angle, which is a target value of the steering angle, on the basis of the map information stored in the map information storage section 181. It should be noted that when the avoidance route is generated, the control target generation section 113 generates a control target for allowing the own vehicle 20A to travel along the avoidance route. That is, in the range from the start node to the end node of the avoidance route, the control target generation section 113 generates the control target on the basis of the positions of the nodes configuring the avoidance route while ignoring the positions of the nodes of the map information.

The autonomous travel control section 114 generates a travel control command on the basis of the control target generated by the control target generation section 113, the travelling speed V acquired by the speed sensor 105, and the steering angle acquired by the steering angle sensor 106. The autonomous travel control section 114 outputs the generated travel control command to the travel driving device 107. Accordingly, each section of the travel driving device 107 is controlled, and the vehicle body 21 travels along the travel route 11 defined by the map information. It should be noted that when the avoidance route has been generated, the vehicle body 21 travels along the avoidance route as a new travel route.

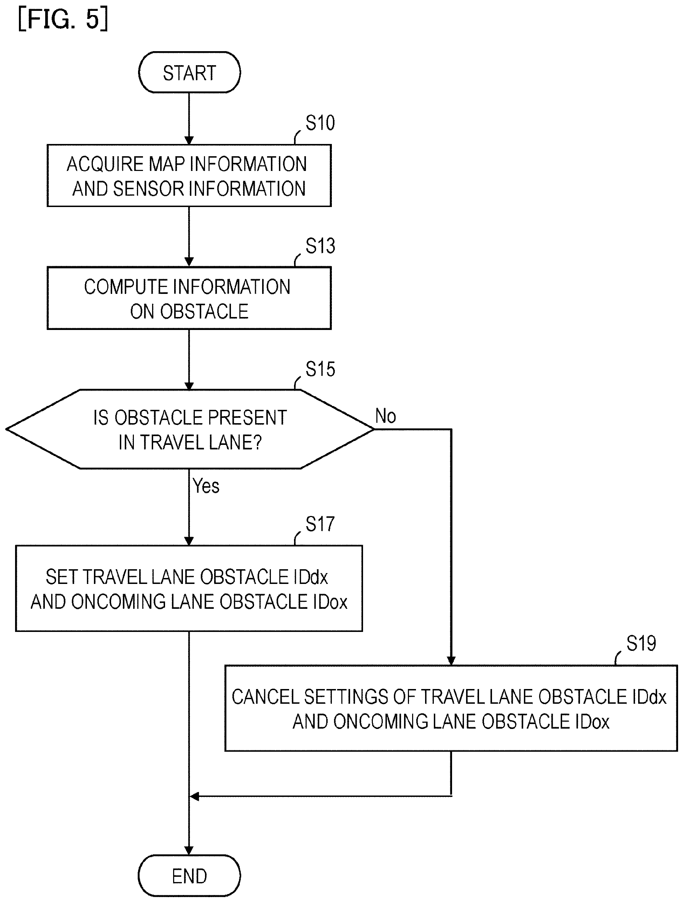

Computation processing of the information on the obstacle will be described in detail with reference to FIG. 5 and FIG. 6. FIG. 5 is a flowchart for depicting an example of a flow of the computation processing of the obstacle information executed by the obstacle information computing section 271. The processing depicted in the flowchart of FIG. 5 is started, for example, when the ignition switch of the own vehicle 20A is turned on and the vehicle controller 100 is activated, and is repeatedly executed in a predetermined control cycle (computation cycle).

As depicted in FIG. 5, in Step S10, the obstacle information computing section 111 acquires the map information from the map information storage section 181 of the storage device 108 and sensor information representing the sensed result of the external sensor 10, and advances the processing to Step S13.

In Step S13, the obstacle information computing section 111 detects an obstacle located in the advancing direction (front) of the own vehicle 20A on the basis of the sensor information of the external sensor 101 acquired in Step S10. In Step S15, the obstacle information computing section 111 computes the information on the detected obstacle, that is, the position of the obstacle and the height and the lateral width that are parameters representing the size of the obstacle.

Details of the computation processing of the obstacle information by the obstacle information computing section 111 will be described with reference to FIG. 6. FIG. 6 is a schematic plan view for depicting the own vehicle 20A travelling in the travel lane 51 and the other vehicle (oncoming vehicle) 20B travelling in the oncoming lane 52. For example, as depicted in FIG. 6, the obstacle information computing section 111 computes a rectangular parallelepiped 91 surrounding the obstacle 90. The obstacle information computing section 111 computes the center of the lower bottom surface of the rectangular parallelepiped 91 as the position Po of the obstacle, the height (the height from the lower bottom surface to the upper bottom surface of the rectangular parallelepiped 91) of the rectangular parallelepiped 91 from the ground surface as the height Ho of the obstacle, and the length of the rectangular parallelepiped 91 in the horizontal direction (left-right direction) perpendicular to the travel route 11 as the lateral width Wo of the obstacle. In Step S13 depicted in FIG. 5, when the computation processing of the information (the position and size) of the obstacle 90 is completed, the processing proceeds to Step S15.

In Step S15, the obstacle information computing section 111 determines whether or not the obstacle 90 is present in the travel lane (travelable area) 10 on the basis of the information on the obstacle 90 computed in Step S13. Where at least a part of the rectangular parallelepiped 91 is present in the travel lane 10 in plan view, the obstacle information computing section 111 determines that the obstacle 90 is present in the travel lane 10. Where the entirety of the rectangular parallelepiped 91 is not present in the travel lane 10 in plan view, the obstacle information computing section 111 determines that the obstacle 90 is not present in the travel lane 10. If it is determined in Step S15 that the obstacle 90 is present in the travel lane 10, the processing proceeds to Step S17. If it is determined in Step S15 that the obstacle 90 is not present in the travel lane 10, the processing proceeds to Step S19.

In Step S17, the obstacle information computing section 111 specifies the node position in the travel lane 10 closest to the position Po of the obstacle 90 on the basis of the position Po of the obstacle 90 and the first table (see FIG. 4A) of the map information. The obstacle information computing section 111 sets the node ID of the specified node position as a travel lane obstacle IDdx. The obstacle information computing section 111 specifies the node position in the oncoming lane 52 closest to the position Po of the obstacle on the basis of the position Po of the obstacle 90 and the second table (see FIG. 4B) of the map information. The obstacle information computing section 111 sets the node ID of the specified node position as an oncoming lane obstacle IDox.

In Step S19, when the travel lane obstacle IDdx and the oncoming lane obstacle IDox have been set, the obstacle information computing section 111 cancels these settings.

When the setting processing (Step S17) of the travel lane obstacle IDdx and the oncoming lane obstacle IDox or the setting cancel processing (Step S19) of the travel lane obstacle IDdx and the oncoming lane obstacle IDox is completed, the processing depicted in the flowchart of FIG. 5 in the control cycle is terminated.

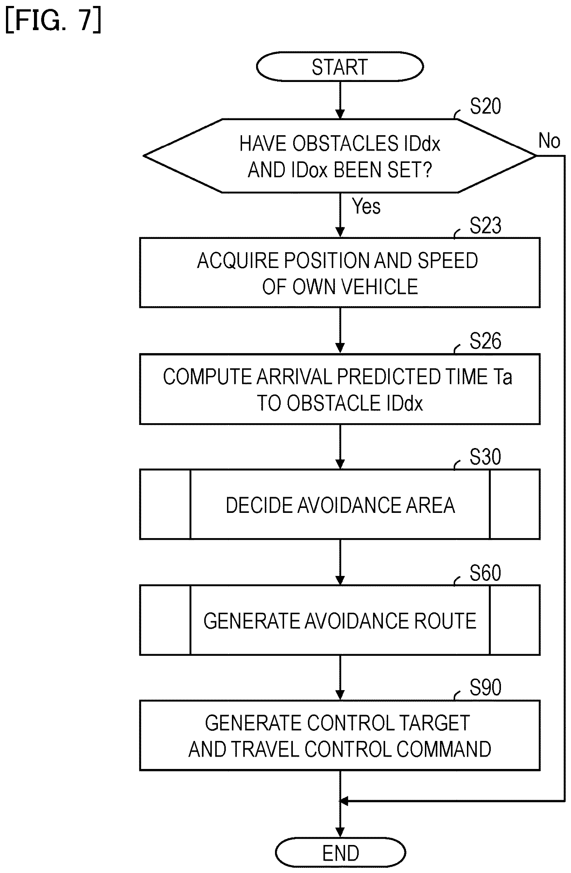

The generation processing of the avoidance route and the generation processing of the control target will be described in detail with reference to FIG. 7 to FIG. 11B. FIG. 7 is a flowchart for depicting an example of a flow (main flow) of main computation processing of the vehicle controller 100. The processing depicted in the flowchart of FIG. 7 is started, for example, when the ignition switch of the own vehicle 20A is turned on and the vehicle controller 100 is activated, and is repeatedly executed in a predetermined control cycle (computation cycle).

As depicted in FIG. 7, in Step S20, the avoidance route generation section 112 determines whether or not the travel lane obstacle IDdx and the oncoming lane obstacle IDox have been set by the obstacle information computing section. The processing in Step S20 corresponds to the processing in which the obstacle 90 is detected in front of the own vehicle 20A and it is determined whether or not the detected obstacle 90 is located in the travel lane 10. When it is determined that the obstacles IDdx and IDox have been set, that is, when the obstacle 90 is detected in front of the own vehicle 20A and it is determined that the detected obstacle 90 is located in the travel lane 10, the processing proceeds to Step S23. When it is determined in Step S20 that the obstacles IDdx and IDox have not been set, the processing depicted in the flowchart of FIG. 7 in the control cycle is terminated. That is, when the obstacle 90 is not detected in front of the own vehicle 20A or it is determined that the detected obstacle 90 is not located in the travel lane 10, the own vehicle 20A travels along the travel route 11 on the basis of the map information because there is no obstacle with which the own vehicle 20A may collide.

In Step S23, the avoidance route generation section 112 acquires the position of the own vehicle 20A from the position sensor 103 and acquires the travelling speed V of the own vehicle 20A from the speed sensor 105, and advances the processing to Step S26.

In Step S26, the avoidance route generation section 112 acquires the node position (coordinates) of the travel lane obstacle IDdx set in Step S17. On the basis of the node position of the travel lane obstacle IDdx and the position of the own vehicle 20A acquired in Step S23, the avoidance route generation section 112 computes a path (distance) along the travel route 11 from the position of the own vehicle 20A to the node position of the travel lane obstacle IDdx. The avoidance route generation section 112 computes an arrival predicted time Ta, which is a time required for the own vehicle 20A to arrives at the node position of the travel lane obstacle IDdx, on the basis of the computed path (distance) and the travelling speed V of the own vehicle 20A acquired in Step S23.

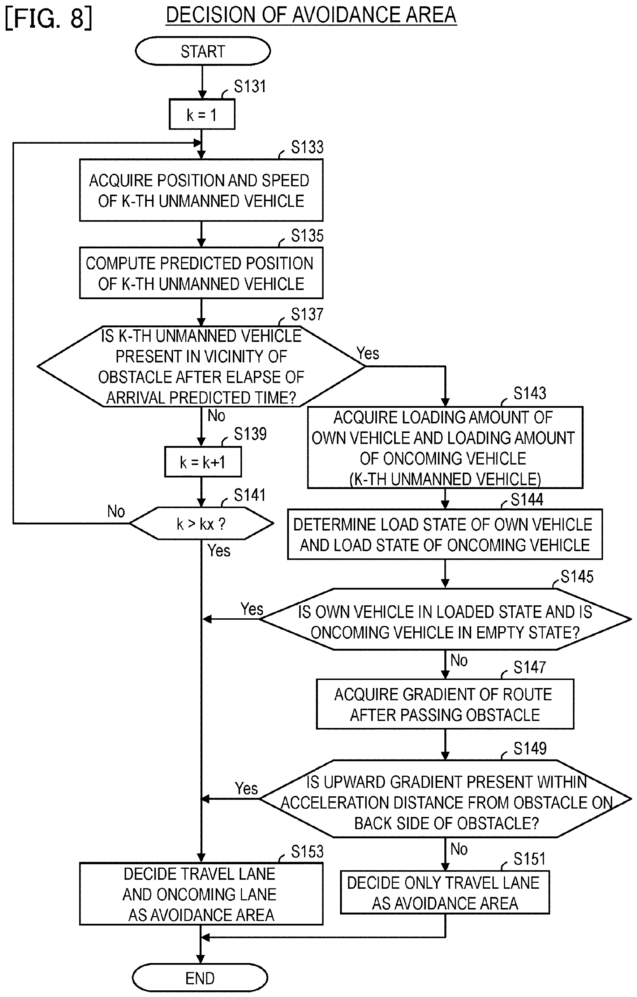

In Step S30, the avoidance route generation section 112 decides an area (avoidance area) that can be used for avoidance in the conveyance path 50 on the basis of the arrival predicted time Ta, the positional relation between the other vehicle 20B and the obstacle 90, the loading amounts of the own vehicle 20A and the other vehicle 20B, and the gradient of the travel route 11, and advances the processing to Step S60. Details of the decision processing (Step S30) of the avoidance area will be described with reference to FIG. 8.

FIG. 8 is a flowchart for depicting an example of a flow of the decision processing of the avoidance area executed by the avoidance route generation section 112. In the decision processing (Step S30) of the avoidance area, first, the avoidance route generation section 112 sets a variable k to 1 in Step S131 and advances the processing to Step S133. It should be noted that the variable k is a unique number assigned to each of the unmanned vehicles 20 present at the work site. The variable k is a natural number that increases by 1 in Step S139 to be described later. Hereinafter, the unmanned vehicle 20 to which the variable k is assigned is also referred to as a k-th unmanned vehicle 20.

The unmanned vehicle 20 at the work site acquires the sensed information of the position sensor 103 and the speed sensor 105 provided in the unmanned vehicle 20 in a predetermined control cycle, and transmits the information to the other unmanned vehicle 20 via the wireless communication line 40. In Step S133, the avoidance route generation section 112 acquires the position Pk and the travelling speed Vk of the unmanned vehicle 20 from the k-th unmanned vehicle 20, and advances the processing to Step S135.

In Step S135, the avoidance route generation section 112 computes the travelling distance Dk of the k-th unmanned vehicle on the basis of the travelling speed Vk acquired in Step S133 and the arrival predicted time Ta computed in Step S26 (Dk = Vk·Ta). On the basis of the position Pk of the unmanned vehicle 20 acquired in Step S133, the travel route 11 of the unmanned vehicle 20 included in the map information, and the travelling distance Dk, the avoidance route generation section 112 computes the predicted position Pka of the k-th unmanned vehicle 20 at the time when the arrival predicted time Ta elapses. The avoidance route generation section 112 specifies the node position closest to the predicted position Pka, and sets the node ID of the specified node position as the other vehicle predicted position IDk.

In the next Step S137, the avoidance route generation section 112 determines whether or not the k-th unmanned vehicle 20 is present in the vicinity of the obstacle 90 after the elapse of the arrival predicted time Ta (elapsed time) on the basis of the oncoming lane obstacle IDox set in Step S17 and the other vehicle predicted position IDk set in Step S135. Where the oncoming lane obstacle IDox is not present within a predetermined distance Dp from the node position of the other vehicle predicted position IDk, the avoidance route generation section 112 determines that the k-th unmanned vehicle 20 is not present in the vicinity of the obstacle 90 after the elapse of the arrival predicted time Ta, and advances the processing to Step S139. Where the oncoming lane obstacle IDox is present within the predetermined distance Dp from the node position of the other vehicle predicted position IDk, the avoidance route generation section 112 determines that the k-th unmanned vehicle 20 is present in the vicinity of the obstacle 90 after the elapse of the arrival predicted time Ta, and advances the processing to Step S143.

In Step S139, the avoidance route generation section 112 adds 1 to the variable k and advances the processing to Step S141. In Step S141, the avoidance route generation section 112 determines whether or not the variable k is larger than a variable threshold value kx. The variable threshold value kx corresponds to the total number of unmanned vehicles 20 to which the variable k is assigned at the work site. When it is determined in Step S141 that the variable k set in Step S139 is equal to or smaller than the variable threshold value kx, the processing returns to Step S133. In addition, when it is determined in Step S141 that the variable k set in Step S139 is larger than the variable threshold value kx, the processing proceeds to Step S153. Thus, when the processing of Steps S133 to S137 is performed for a certain unmanned vehicle 20 and a negative determination is made in Step S137, the processing of Steps S133 to S137 is similarly performed for the next unmanned vehicle 20.

The unmanned vehicle 20 at the work site acquires sensed information of the load sensor 102 provided in the unmanned vehicle 20 in a predetermined control cycle, and transmits the information to the other unmanned vehicle 20 via the wireless communication line 40. In Step S143, the avoidance route generation section 112 acquires the loading amount of the own vehicle 20A from the load sensor 102 and acquires the loading amount of the unmanned vehicle 20 from the k-th unmanned vehicle 20, and advances the processing to Step S144. It should be noted that in the processing in Step S143 and thereafter, the k-th unmanned vehicle 20 is also referred to as an oncoming vehicle 20B for convenience of explanation.

In Step S144, the avoidance route generation section 112 determines the load state of the own vehicle 20A and the load state of the oncoming vehicle 20B. Where the loading amount of the own vehicle 20A acquired in Step S143 is equal to or larger than a loading amount threshold value, the avoidance route generation section 112 determines the load state of the own vehicle 20A as a loaded state. Where the loading amount of the own vehicle 20A is smaller than the loading amount threshold value, the avoidance route generation section 112 determines the load state of the own vehicle 20A as an empty state. Similarly, where the loading amount of the unmanned vehicle 20 acquired in Step S143 is equal to or larger than the loading amount threshold value, the avoidance route generation section 112 determines the load state of the unmanned vehicle 20 as the loaded state. Where the loading amount of the unmanned vehicle 20 is smaller than the loading amount threshold value, the avoidance route generation section 112 determines the load state of the unmanned vehicle 20 as the empty state.

In Step S145, the avoidance route generation section 112 determines whether or not the load state of the own vehicle 20A is the loaded state and the load state of the oncoming vehicle 20B is the empty state. If it is determined in Step S145 that the load state of the own vehicle 20A is the loaded state and the load state of the oncoming vehicle 20B is the empty state, the processing proceeds to Step S153. In Step S145, when it is determined that at least one of that the load state of the own vehicle 20A is the empty state and that the load state of the oncoming vehicle 20B is the loaded state is satisfied, the processing proceeds to Step S147.

It should be noted that since the specifications of the own vehicle 20A and the oncoming vehicle 20B are the same, a positive determination in Step S145 means that the loading amount of the own vehicle 20A is larger than the loading amount of the oncoming vehicle 20B.

In Step S147, the avoidance route generation section 112 acquires the gradient of the travel route 11 after the own vehicle 20A has passed the obstacle 90, that is, the gradients of the plurality of nodes 12 configuring the travel route 11 on the back side of the obstacle 90 as viewed from the own vehicle 20A, and advances the processing to Step S149. It should be noted that the gradients of the plurality of nodes 12 acquired in Step S147 are the gradients of the nodes 12 in front (in the advancing direction) of the own vehicle 20A relative to the travel lane obstacle IDdx, and the gradients of the nodes 12 present within a predetermined acceleration distance Da from the travel lane obstacle IDdx. The acceleration distance Da is defined, for example, by adding a margin value to a distance required to accelerate the vehicle body 21 decelerated by the avoidance operation to the speed limit (see FIG. 4A) specified in the map information.

In Step S149, the avoidance route generation section 112 determines whether or not a gradient larger than 0 (zero) is included in the gradients of the plurality of nodes 12 acquired in Step S147. A case where a gradient larger than 0 (zero) is included in the gradients of the plurality of nodes 12 acquired in Step S147 means a case where an upward gradient is present within the acceleration distance Da from the obstacle 90 on the back side of the obstacle 90 as viewed from the own vehicle 20A. On the other hand, a case where a gradient larger than 0 is not included in the gradients of the plurality of nodes 12 acquired in Step S147 means a case where there is no upward gradient within the acceleration distance Da from the obstacle 90 on the back side of the obstacle 90 as viewed from the own vehicle 20A.

If it is determined in Step S149 that a gradient larger than 0 is not included in the gradients of the plurality of nodes 12 acquired in Step S147, the processing proceeds to Step S151. If it is determined in Step S149 that a gradient larger than 0 is included in the gradients of the plurality of nodes 12 acquired in Step S147, the processing proceeds to Step S153.

The processing from Step S143 to Step S149 corresponds to processing of determining whether the travelling priority of the own vehicle 20A is higher or lower than the travelling priority of the oncoming vehicle 20B. In the first embodiment, when a negative determination is made in the determination processing in Step S145 and a negative determination is made in the determination processing in Step S149, it is determined that the travelling priority of the own vehicle 20A is lower than the travelling priority of the oncoming vehicle 20B, and the processing proceeds to Step S151. On the other hand, when a positive determination is made in the determination processing in Step S145 or a positive determination is made in the determination processing in Step S149, it is determined that the travelling priority of the own vehicle 20A is higher than the travelling priority of the oncoming vehicle 20B, and the processing proceeds to Step S153.

In Step S151, the avoidance route generation section 112 decides only the travel lane 51 as an area (avoidance area) that can be used for avoidance. In Step S153, the avoidance route generation section 112 decides the travel lane 51 and the oncoming lane 52 as an area (avoidance area) that can be used for avoidance. If the decision processing (Step S151 or Step S153) of the avoidance area is completed, the processing depicted in the flowchart of FIG. 8 in the control cycle is terminated.

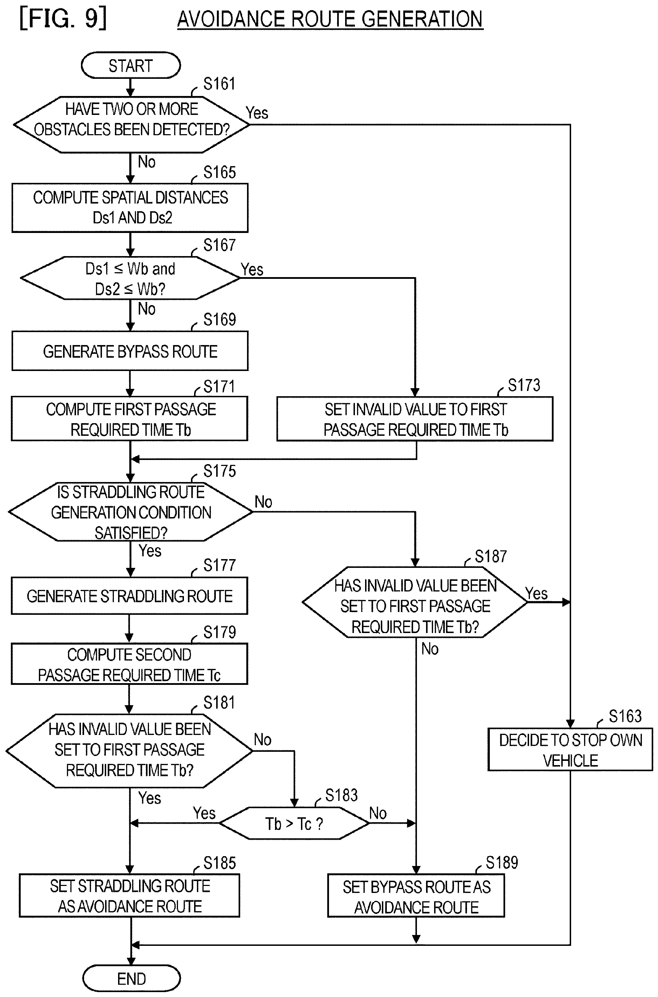

As depicted in FIG. 7, when the avoidance area decision processing (Step S30) is completed, the processing proceeds to Step S60. In Step S60, the avoidance route generation section 112 generates an avoidance route for avoiding the obstacle 90 on the basis of the avoidance area decided in Step S30, and advances the processing to Step S90. Details of the generation processing of the avoidance route will be described with reference to FIG. 9.

FIG. 9 is a flowchart for depicting an example of a flow of the generation processing of the avoidance route executed by the avoidance route generation section 112. In the generation processing (Step S90) of the avoidance route, first, the avoidance route generation section 112 determines whether or not two or more obstacles 90 have been detected in the avoidance area by the external sensor 101 in Step S161. If it is determined that two or more obstacles 90 have been detected in the avoidance area, the avoidance route generation section 112 advances the processing to Step S163. In Step S163, the avoidance route generation section 112 decides to stop the own vehicle 20A without generating an avoidance route, and terminates the processing depicted in the flowchart of FIG. 9 in the control cycle.

If it is determined in Step S161 that two or more obstacles 90 have not been detected in the avoidance area by the external sensor 101, that is, if it is determined that only one obstacle 90 has been detected in the avoidance area by the external sensor 101, the processing proceeds to Step S165.

In Step S165, the avoidance route generation section 112 computes the left and right spatial distances Ds1 and Ds2 of the obstacle 90 as viewed from the own vehicle 20A on the basis of the position Po of the obstacle 90, the lateral width Wo of the obstacle 90, and the avoidance area.

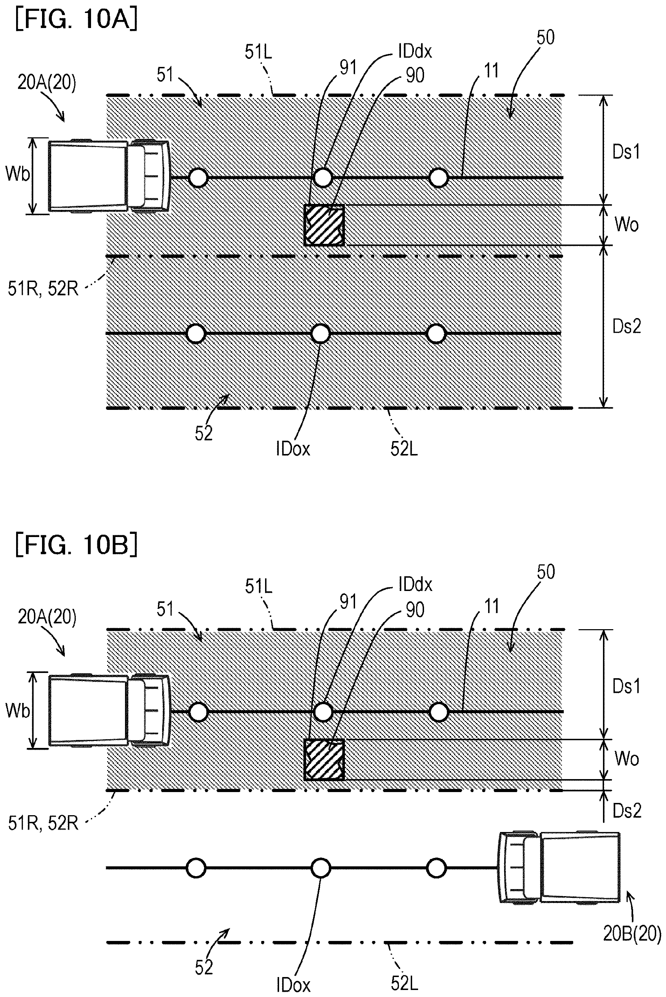

The spatial distances Ds1 and Ds2 corresponding to the avoidance area will be described with reference to FIG. 10A and FIG. 10B. FIG. 10A and FIG. 10B are diagrams for depicting the spatial distances corresponding to the avoidance area. FIG. 10A depicts a case where the travel lane 51 and the oncoming lane 52 are set as the avoidance area, and FIG. 10B depicts a case where only the travel lane 51 is set as the avoidance area. In FIG. 10A and FIG. 10B, the avoidance area is schematically depicted by hatching with oblique lines.

As depicted in FIG. 10A and FIG. 10B, the spatial distance Ds1 corresponds to the distance from the left end of the obstacle 90 to the left-side boundary line (that is, the lane forming line 51L) of the avoidance area. As depicted in FIG. 10A, where the avoidance area is configured with the travel lane 51 and the oncoming lane 52, the spatial distance Ds2 corresponds to the distance from the right end of the obstacle 90 to the right-side boundary line (that is, the lane forming line 52L) of the avoidance area. As depicted in FIG. 10B, where the avoidance area is configured with only the travel lane 51, the spatial distance Ds2 corresponds to the distance from the right end of the obstacle 90 to the right-side boundary line (that is, the lane forming line 51R) of the avoidance area.

Thus, the value of the spatial distance Ds2 computed in the processing of Step S165 in FIG. 9 differs depending on the set avoidance area. When the computation processing (Step S165) of the spatial distances Ds1 and Ds2 is completed, the processing proceeds to Step S167.

In Step S167, the avoidance route generation section 112 determines whether or not the own vehicle 20A can pass the side of the obstacle 90 without contacting the obstacle 90. In the present embodiment, in Step S167, the avoidance route generation section 112 determines whether or not the spatial distances Ds1 and Ds2 computed in Step S165 are equal to or smaller than the vehicle width Wb of the own vehicle 20A. Where the spatial distance Ds1 is equal to or smaller than the vehicle width Wb and the spatial distance Ds2 is equal to or smaller than the vehicle width Wb, the avoidance route generation section 112 determines that the own vehicle 20A cannot pass the side of the obstacle 90 without contacting the obstacle 90, and advances the processing to Step S173. On the other hand, where at least one of the spatial distance Ds1 and the spatial distance Ds2 is larger than the vehicle width Wb, the avoidance route generation section 112 determines that the own vehicle 20A can pass the side of the obstacle 90 without contacting the obstacle 90, and advances the processing to Step S169.

In Step S169, the avoidance route generation section 112 generates a bypass route that passes the side of the obstacle 90 on the basis of the position of the own vehicle 20A, the position of the obstacle 90, and the avoidance area. In the bypass route, a node of the travel route 11 in front of the own vehicle 20A and before the obstacle 90 is set as a start point, and a node of the travel route 11 in front of the own vehicle 20A and on the back side of the obstacle 90 is set as an end point. It should be noted that the avoidance route generation section 112 generates a route that passes the center of the larger space between the spatial distance Ds1 and the spatial distance Ds2 as the bypass route.

It should be noted that the generation method of the bypass route is not limited to this. For example, the avoidance route generation section 112 may generate the bypass route as follows. Where each of the spatial distance Ds1 and the spatial distance Ds2 is larger than the vehicle width Wb, the avoidance route generation section 112 generates a left-side bypass route that passes the center of the space on the left side of the obstacle 90 and a right-side bypass route that passes the center of the space on the right side of the obstacle 90. The avoidance route generation section 112 selects a route in which a change of a course from the travel route 11 is minimized between the left-side bypass route and the right-side bypass route as a bypass route that is a candidate of the avoidance route.

In addition, in the present embodiment, the bypass route is generated such that the center of the vehicle body 21 passes the center of the space on the side of the obstacle 90 in plan view. It should be noted that the generation method of the bypass route is not limited to this. The bypass route may be a route in which the vehicle body 21 passes the side of the obstacle 90. Therefore, the bypass route may be generated such that, for example, a position shifted from the center of the vehicle body 21 to either the left or the right passes the center of the space on the side of the obstacle 90 in plan view.

When the generation processing (Step S169) of the bypass route is completed, the processing proceeds to Step S171. In Step S171, a first passage required time Tb that is a time required to pass the bypass route generated in Step S169 is computed. Specifically, the avoidance route generation section 112 computes the first passage required time Tb on the basis of a route length L1 from the start point to the end point of the bypass route and the travelling speed V of the own vehicle 20A acquired in Step S23 (Tb = L1/V).

When it is determined that the own vehicle 20A cannot pass the side of the obstacle 90 without contacting the obstacle 90 (Yes in Step S167), the avoidance route generation section 112 does not generate a bypass route, and sets an invalid value to a bypass required time in Step S173.

When the computation processing (Step S171) of the first passage required time Tb or the invalid value setting processing (Step S173) of the first passage required time Tb is completed, the processing proceeds to Step S175. In Step S175, the avoidance route generation section 112 determines whether or not a straddling route generation condition is satisfied.

The straddling route generation condition is satisfied when both of the following (condition A) and (condition B) are satisfied, and is not satisfied when at least one of the (condition A) and (condition B) is not satisfied.

(Condition A) The own vehicle 20A can pass above the obstacle 90 without contacting the obstacle 90.

(Condition B) The own vehicle 20A can pass above the obstacle 90 without deviating from the avoidance area.

The avoidance route generation section 112 determines that the (condition A) is satisfied when a spatial distance Dw between the left and right wheels 22 of the own vehicle 20A is larger than the lateral width Wo of the obstacle 90 and the lowest ground clearance (road clearance) Cr of the own vehicle 20A is larger than the height Ho of the obstacle 90.

The avoidance route generation section 112 computes the shortest distance Do from the travel route 11 to the position Po of the obstacle 90 on the basis of the position Po of the obstacle 90. The avoidance route generation section 112 computes a movement limit distance Do0 corresponding to the avoidance area on the basis of the map information (see FIG. 4A and FIG. 4B).

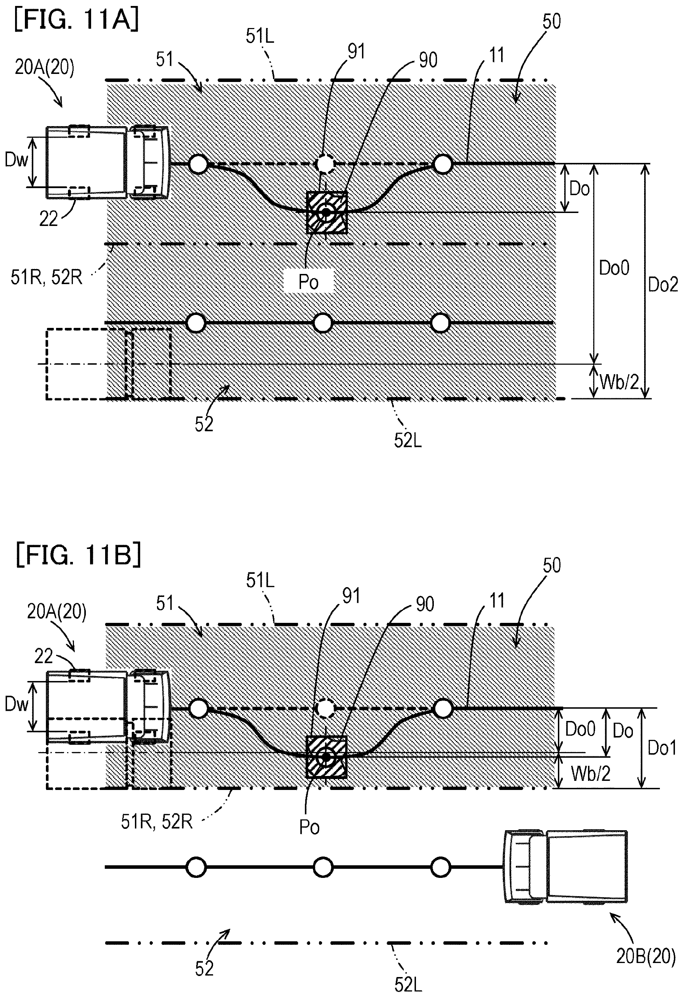

The movement limit distance Do0 corresponding to the avoidance area will be described with reference to FIG. 11A and FIG. 11B. FIG. 11A and FIG. 11B are diagrams each depicting the movement limit distance Do0 corresponding to the avoidance area. FIG. 11A depicts a case where the travel lane 51 and the oncoming lane 52 are set as the avoidance area, and FIG. 11B depicts a case where only the travel lane 51 is set as the avoidance area. In FIG. 11A and FIG. 11B, the avoidance area is schematically depicted by hatching with oblique lines.

As depicted in FIG. 11A and FIG. 11B, the movement limit distance Do0 corresponds to the maximum value of a laterally movable distance of the vehicle body 21 without deviating from the avoidance area. It should be noted that the deviation from the avoidance area means that a part of the own vehicle 20A strays to the outside of the avoidance area in plan view. As depicted in FIG. 11A, where the avoidance area is configured with the travel lane 51 and the oncoming lane 52, the movement limit distance Do0 is computed by, for example, subtracting half of the vehicle width Wb from a distance Do2 from the travel route 11 of the travel lane 51 to the lane forming line 52L of the oncoming lane 52 (Do0 = Do2 - Wb/2). It should be noted that although not illustrated, the movement limit distance Do0 is preferably obtained by subtracting half of the vehicle width Wb from the distance Do2 and further subtracting a predetermined margin value.

As depicted in FIG. 11B, where the avoidance area is configured with only the travel lane 51, the movement limit distance Do0 is computed by, for example, subtracting half of the vehicle width Wb from a distance Do1 from the travel route 11 of the travel lane 51 to the lane forming line 51R of the travel lane 51 (Do0 = Do1 - Wb/2). It should be noted that although not illustrated, the movement limit distance Do0 is preferably obtained by subtracting half of the vehicle width Wb from the distance Do1 and further subtracting a predetermined margin value.

The avoidance route generation section 112 determines that the (condition B) is satisfied when the shortest distance Do of the position Po of the obstacle 90 from the travel route 11 is equal to or smaller than the movement limit distance Do0. For example, in the example depicted in FIG. 11A, since the shortest distance Do is equal to or smaller than the movement limit distance Do0, the (condition B) is satisfied. Where the shortest distance Do of the position Po of the obstacle 90 from the travel route 11 is larger than the movement limit distance Do0, the avoidance route generation section 112 determines that the (condition B) is not satisfied. For example, in the example depicted in FIG. 11B, since the shortest distance Do is larger than the movement limit distance Do0, the (condition B) is not satisfied.

In Step S175 depicted in FIG. 9, where it is determined that the straddling route generation condition is satisfied, the processing proceeds to Step S177, and where it is determined that the straddling route generation condition is not satisfied, the processing proceeds to Step S187.

In Step S177, the avoidance route generation section 112 generates a straddling route that is a route for straddling the obstacle 90. In the straddling route, a node of the travel route 11 in front of the own vehicle 20A and before the obstacle 90 is set as a start point, and a node of the travel route 11 in front of the own vehicle 20A and on the back side of the obstacle 90 is set as an end point. In the present embodiment, the straddling route is generated such that the center of the vehicle body 21 passes directly above the position (center position) Po of the obstacle 90. It should be noted that the generation method of the straddling route is not limited to this. The straddling route may be a route in which the vehicle body 21 passes directly above the obstacle 90. Therefore, the straddling route may be generated such that, for example, a position shifted from the center of the vehicle body 21 to either the left or the right passes the position (center position) Po of the obstacle 90.

When the generation processing (Step S177) of the straddling route is completed, the processing proceeds to Step S179. In Step S179, a second passage required time Tc that is a time required to pass the straddling route generated in Step S177 is computed. Specifically, the avoidance route generation section 112 computes the second passage required time Tc on the basis of a route length L2 from the start point to the end point of the straddling route and the travelling speed V of the own vehicle 20A acquired in Step S23 (Tc = L2/V).

When the computation processing (Step S179) of the second passage required time Tc is completed, the processing proceeds to Step S181. In Step S181, the avoidance route generation section 112 determines whether or not an invalid value has been set to the first passage required time Tb. When it is determined in Step S181 that no invalid value has been set to the first passage required time Tb, the processing proceeds to Step S183, and when it is determined that an invalid value has been set to the first passage required time Tb, the processing proceeds to Step S185.

In Step S183, the avoidance route generation section 112 determines whether or not the first passage required time Tb is larger than the second passage required time Tc. When it is determined in Step S183 that the first passage required time Tb is larger than the second passage required time Tc, the processing proceeds to Step S185, and when it is determined that the first passage required time Tb is equal to or smaller than the second passage required time Tc, the processing proceeds to Step S189.

In Step S187, the avoidance route generation section 112 performs the processing similar to Step S181. When it is determined in Step S187 that no invalid value has been set to the first passage required time Tb, the processing proceeds to Step S189, and when it is determined that an invalid value has been set to the first passage required time Tb, the processing proceeds to Step S163.

In Step S185, the avoidance route generation section 112 sets the straddling route generated in Step S177 as the avoidance route, and terminates the processing depicted in the flowchart of FIG. 9 in the control cycle. In Step S189, the avoidance route generation section 112 sets the bypass route generated in Step S169 as the avoidance route, and terminates the processing depicted in the flowchart of FIG. 9 in the control cycle.

As depicted in FIG. 7, when the avoidance route generation processing (Step S60) is completed, the processing proceeds to Step S90. Where the avoidance route has been generated, the control target generation section 113 generates a control target (including the target speed Vt and the target steering angle) to allow the vehicle body 21 to travel along the avoidance route in Step S90. In order to allow the vehicle body 21 to travel along the avoidance route, the control target generation section 113 sets the target speed Vt of the nodes between the start point and the end point of the avoidance route lower than the limit speed set to the nodes of the start point and the end point of the avoidance route. In addition, the autonomous travel control section 114 generates a travel control command on the basis of the control target. The generated travel control command is output to the travel driving device 107. Accordingly, each section of the travel driving device 107 is controlled, and the vehicle body 21 travels along the avoidance route.

When the straddling route is generated as the avoidance route in Step S60, the target speed Vt that is the target value of the travelling speed of the own vehicle 20A is set as follows. The control target generation section 113 decreases the target speed Vt of the own vehicle 20A in the straddling route as the height Ho of the obstacle 90 is higher (that is, as the value obtained by subtracting the height Ho of the obstacle 90 from the lowest ground clearance Cr of the own vehicle 20A becomes smaller). In addition, the control target generation section 113 decreases the target speed Vt of the own vehicle 20A in the straddling route as the lateral width Wo of the obstacle 90 is larger (that is, as the value obtained by subtracting the lateral width Wo of the obstacle 90 from the spatial distance Dw between the left and right wheels 22 of the own vehicle 20A becomes smaller). By allowing the vehicle body 21 to travel at a low speed, it is possible to enhance the route following performance with respect to the avoidance route of the own vehicle 20A. As a result, it is possible to more reliably prevent contact between the own vehicle 20A travelling along the straddling route and the obstacle 90.

When it is determined that the own vehicle 20A cannot pass the side of and above the obstacle 90 without contacting the obstacle 90 (No in Step S175 and Yes in Step S187), the avoidance route has not been generated, and it has been decided to stop the own vehicle 20A (Step S163). In this case, in Step S90, the control target generation section 113 sets the target speed Vt of the nodes before the obstacle 90 as viewed from the own vehicle 20A to 0 (zero). In addition, the autonomous travel control section 114 generates a travel control command on the basis of the control target. The generated travel control command is output to the travel driving device 107. Accordingly, each section of the travel driving device 107 is controlled, and the own vehicle 20A stops before the obstacle 90.

It should be noted that in a case where the oncoming vehicle 20B is present and the generated avoidance route is a bypass route that passes in the oncoming lane 52, the vehicle controller 100 generates an intrusion prohibition command that is a control command for prohibiting intrusion into an area nearer the own vehicle 20A side relative to the end point of the avoidance route until the own vehicle 20A arrives at the end point of the avoidance route, and transmits the generated intrusion prohibition command to the oncoming vehicle 20B via the wireless communication device 109.

When the unmanned vehicle 20 (oncoming vehicle 20B) receives the intrusion prohibition command, the travelling speed of the unmanned vehicle 20 (oncoming vehicle 20B) is reduced or the unmanned vehicle 20 (oncoming vehicle 20B) is decelerated such that the unmanned vehicle 20 (oncoming vehicle 20B) does not intrude into the bypass route until the passage through the avoidance route (bypass route) by the unmanned vehicle 20 (own vehicle 20A) is completed.

### -Operation-

An operation of the own vehicle 20A in a case where the obstacle 90 is detected in front of the own vehicle 20A in the travel lane 51 of the own vehicle 20A will be described. When detecting the obstacle 90, the vehicle controller 100 computes the arrival predicted time Ta. In a case where it is determined that the oncoming vehicle 20B is not present in the vicinity of the obstacle 90 at the time when the arrival predicted time Ta elapses, the vehicle controller 100 sets the avoidance area including not only the travel lane 51 but also the oncoming lane 52. Accordingly, the avoidance operation using the oncoming lane 52 can be executed.

The vehicle controller 100 sets the travel lane 51 and the oncoming lane 52 as the avoidance area when the travelling priority of the own vehicle 20A is higher than that of the oncoming vehicle 20B, even in a case where it is determined that the oncoming vehicle 20B is present in the vicinity of the obstacle 90 at the time when the arrival predicted time Ta elapses. In this case, the intrusion prohibition command is output from the own vehicle 20A to the oncoming vehicle 20B to decelerate or stop the oncoming vehicle 20B. Accordingly, the travel (avoidance) of the own vehicle 20A can be given priority.

The fuel consumption in the case of re-acceleration in the loaded state is larger than the fuel consumption in the case of re-acceleration in the empty state. Where the load state of the own vehicle 20A is the loaded state and the load state of the oncoming vehicle 20B is the empty state, if the avoidance area is set to only the travel lane 51 and the travel of the oncoming vehicle 20B is given priority, it is not preferable from the viewpoint of fuel consumption. In this case, the fuel consumption used by the own vehicle 20A for re-acceleration from deceleration is larger than that in a case where the travel of the own vehicle 20A is given priority and the other vehicle 20B is re-accelerated. As a result, the operating cost of the entire work site increases. In contrast, in the present embodiment, the avoidance area is set not only to the travel lane 51 but also to the oncoming lane 52 in a case where the load state of the own vehicle 20A is the loaded state and the load state of the oncoming vehicle 20B is the empty state. Accordingly, it is possible to reduce the reduction amount of the travelling speed in the avoidance operation of the own vehicle 20A. As a result, the productivity at the entire work site can be increased.

In the travel route 11 after the own vehicle 20A avoids the obstacle 90, in a case where an upward gradient is present in the vicinity of the obstacle 90, the fuel consumption of the own vehicle 20A becomes larger than that in a case where an upward gradient is not present. This is because the fuel consumption of re-acceleration on an upward gradient is larger than that of re-acceleration on a flat ground or a downward gradient. In the present embodiment, where an upward gradient is present in the vicinity of the obstacle 90, the productivity at the entire work site can be increased by widening the avoidance area and reducing the reduction amount of the travelling speed in the avoidance operation of the own vehicle 20A.

Where the straddling route generation condition is satisfied, the vehicle controller 100 generates a straddling route. Where the bypass route has not been generated, or where the bypass route has been generated but the first passage required time Tb is larger than the second passage required time Tc, the vehicle body 21 is allowed to travel along the straddling route. Accordingly, the own vehicle 20A can efficiently execute the avoidance operation to the obstacle 90.

It should be noted that when spaces on the left side and the right side of the obstacle 90 in the avoidance area are narrow, the bypass route is not generated. In addition, where the straddling route generation condition is not satisfied, the straddling route is not generated. When neither the straddling route nor the bypass route is generated, the vehicle controller 100 stops the own vehicle 20A. Thus, even when the avoidance route is not generated, it is possible to appropriately prevent contact between the own vehicle 20A and the obstacle 90.

According to the above-described embodiment, the following effects are exhibited.
(1) In the present embodiment, the autonomous travel system is mounted on the unmanned vehicle (conveyance vehicle) 20. The autonomous travel system includes the vehicle controller (controller) 100 for controlling the own vehicle (conveyance vehicle) 20A that can autonomously travel along the travel route 11. The vehicle controller 100 computes the arrival predicted time Ta that is a time required for the own vehicle 20A to arrive at the position Po of the obstacle 90 on the basis of the position Po of the obstacle 90, and the position P and the travelling speed V of the own vehicle 20A, in a case where the obstacle 90 is positioned in the travel lane 51 of the own vehicle 20A (Steps S20, S23, and S26 in FIG. 7).

The vehicle controller 100 computes the predicted position Pka of the other vehicle 20B after the arrival predicted time Ta elapses on the basis of the position Pk and the travelling speed Vk of the other vehicle 20B present around the own vehicle 20A and the arrival predicted time Ta (Steps S133 and S135 in FIG. 8). The vehicle controller 100 determines whether or not the other vehicle 20B is present in the vicinity of the obstacle 90 after the arrival predicted time Ta elapses, on the basis of the position Po of the obstacle 90 and the predicted position Pka of the other vehicle 20B (Step S137 in Fig. 8). The vehicle controller 100 sets the travel lane 51 as the avoidance area and does not set the oncoming lane 52 that is a lane adjacent to the travel lane 51 as the avoidance area, when it is determined that the other vehicle 20B is present in the vicinity of the obstacle 90 after the arrival predicted time Ta elapses (Yes in Step S137 and S151 in FIG. 8). The vehicle controller 100 sets both the travel lane 51 and the oncoming lane 52 as the avoidance area when it is determined that the other vehicle 20B is not present in the vicinity of the obstacle 90 after the arrival predicted time Ta elapses (No in Step S137 and S153 in FIG. 8). The vehicle controller 100 generates an avoidance route as a travel route for the own vehicle 20A to avoid the obstacle 90 in the avoidance area on the basis of the position of the own vehicle 20A, the position Po of the obstacle 90, and the avoidance area (Step S60 in FIG. 7). The vehicle controller 100 allows the own vehicle 20A to travel along the generated avoidance route (Step S90 in FIG. 7).

Thus, according to the present embodiment, where the obstacle 90 is present near the boundary line between the travel lane 51 of the own vehicle 20A and the oncoming lane 52 that is a lane adjacent to the travel lane 51, it is possible to continue travelling of the own vehicle 20A by avoiding the obstacle 90. As a result, the productivity at the work site can be improved in comparison with the technique of stopping the own vehicle 20A in a case where the obstacle 90 is present near the boundary line. In addition, where there is no possibility of contact with the oncoming vehicle 20B, the avoidance operation can be executed by utilizing the oncoming lane 52. In this case, since the avoidance operation can be performed while suppressing a decrease in the travelling speed, the fuel consumption associated with re-acceleration can be suppressed.

(2) The vehicle controller 100 determines whether or not the own vehicle 20A can pass the side of the obstacle 90 without contacting the obstacle 90 on the basis of the position Po of the obstacle 90, the lateral width Wo of the obstacle 90, and the avoidance area (Steps S165 and S167 in FIG. 9). The vehicle controller 100 determines whether or not the own vehicle 20A can pass above the obstacle 90 without contacting the obstacle 90 on the basis of the position Po of the obstacle 90, the lateral width Wo and the height Ho of the obstacle 90, and the avoidance area (Step S175 in FIG. 9).

The vehicle controller 100 stops the own vehicle 20A before the obstacle 90 as viewed from the own vehicle 20A when it is determined that the own vehicle 20A cannot pass both the side of and above the obstacle 90 without contacting the obstacle 90 (Yes in S167, No in S175, Yes in S187, and S163 In FIG. 9). The vehicle controller 100 generates a bypass route passing the side of the obstacle 90 as a candidate of the avoidance route when it is determined that the own vehicle 20A can pass the side of the obstacle 90 without contacting the obstacle 90 (No in S167 and S169 in FIG. 9). The vehicle controller 100 generates a straddling route straddling the obstacle 90 as a candidate of the avoidance route when it is determined that the own vehicle 20A can pass above the obstacle 90 without contacting the obstacle 90 (Yes in S175 and S177 in FIG. 9).

In this configuration, the avoidance operation can be realized by using either the bypass route or the straddling route as the avoidance route. Thus, according to the present embodiment, the frequency of stopping the own vehicle 20A can be reduced as compared with the technique of generating only the bypass route or only the straddling route as the avoidance route. As a result, the productivity at the work site is improved.

(3) The vehicle controller 100 computes the first passage required time Tb that is a time required for the own vehicle 20A to pass the bypass route and the second passage required time Tc that is a time required for the own vehicle 20A to pass the straddling route, in a case where both the bypass route and the straddling route are generated (S171 and S179 in FIG. 9). The vehicle controller 100 sets the bypass route as the avoidance route when the first passage required time Tb is shorter than the second passage required time Tc (No in Step S183 and S189 in FIG. 9). The vehicle controller 100 sets the straddling route as the avoidance route when the second passage required time Tc is shorter than the first passage required time Tb (Yes in Step S183 and S185 in FIG. 9).

In this configuration, a plurality of avoidance routes capable of realizing the avoidance operation is generated, and a route having a shorter passage required time is selected among the plurality of avoidance routes. Therefore, the travelling time of the own vehicle 20A such as the conveyance time is reduced, and the productivity at the work site is improved.

(4) The vehicle controller 100 determines whether the travelling priority of the own vehicle 20A is higher or lower than the travelling priority of the other vehicle 20B (S143 to S149 in FIG. 8). The vehicle controller 100 sets the travel lane 51 as the avoidance area and does not set the oncoming lane 52 as the avoidance area (S511 in FIG. 8) when it is determined that the other vehicle 20B is present in the vicinity of the obstacle 90 after the arrival predicted time Ta elapses (Yes in S137 in FIG. 8) and it is determined that the travelling priority of the own vehicle 20A is lower than the travelling priority of the other vehicle 20B (No in S145 and No in S149 in FIG. 8). The vehicle controller 100 sets both the travel lane 51 and the oncoming lane 52 as the avoidance area (S153 in FIG. 8) when it is determined that the other vehicle 20B is present in the vicinity of the obstacle 90 after the arrival predicted time Ta elapses (Yes in S137 of FIG. 8) and it is determined that the travelling priority of the own vehicle 20A is higher than the travelling priority of the other vehicle 20B (Yes in either S145 or S149 in FIG. 8).

According to this configuration, under the condition that the fuel efficiency is largely reduced by deceleration associated with the avoidance operation of the own vehicle 20A, the avoidance area is set wide. Accordingly, deceleration associated with the avoidance operation of the own vehicle 20A can be suppressed, and thus an increase in the operating cost can be suppressed and the productivity can be improved.

(5) The vehicle controller 100 determines that the travelling priority of the own vehicle 20A is higher than the travelling priority of the other vehicle 20B when the loading amount of the own vehicle 20A is larger than the loading amount of the oncoming vehicle (the other vehicle) 20B (Yes in Step S145 of FIG. 8). According to this configuration, it is possible to suppress an increase in the fuel consumption caused by re-acceleration in the loaded state of the own vehicle 20A. As a result, the productivity at the entire work site can be increased.

(6) The vehicle controller 100 acquires information on the gradient of the travel lane 51 of the own vehicle 20A, and determines whether or not an upward gradient is present within the acceleration distance (predetermined distance) Da from the obstacle 90 on the back side of the obstacle 90 as viewed from the own vehicle 20A on the basis of the acquired information on the gradient (S147 and S149 in FIG. 8). The vehicle controller 100 determines that the travelling priority of the own vehicle 20A is higher than the travelling priority of the oncoming vehicle 20B when it is determined that an upward gradient is present (Yes in S149 of FIG. 8). According to this configuration, it is possible to suppress an increase in the fuel consumption caused by re-acceleration of the own vehicle 20A in the upward gradient. As a result, the productivity at the entire work site can be increased.

(7) The vehicle controller 100 transmits to the oncoming vehicle 20B the intrusion prohibition command (control command) for prohibiting intrusion into an area nearer the own vehicle 20A side relative to the end point of the avoidance route until the own vehicle 20A arrives at the end point of the avoidance route, in a case where it is determined that the oncoming vehicle 20B is present in the vicinity of the obstacle 90 after the arrival predicted time Ta elapses and it is determined that the travelling priority of the own vehicle 20A is higher than the travelling priority of the oncoming vehicle 20B. According to this configuration, it is possible to decelerate or stop the oncoming vehicle 20B while the own vehicle 20A executes the avoidance operation by utilizing the oncoming lane 52. Accordingly, it is possible to reliably prevent contact between the own vehicle 20A executing the avoidance operation and the oncoming vehicle 20B.

As described above, the vehicle controller 100 according to the first embodiment computes the avoidance area that can be used by the own vehicle 20A to avoid the obstacle 90, in consideration of the width of the travel lane 51, the width of the conveyance path 50, the presence or absence of the oncoming vehicle 20B, and the like. Accordingly, the avoidance operation for preventing deviation from the conveyance path 50 and contact with the oncoming vehicle 20B is realized. Further, since the number of stops of the own vehicle 20A can be reduced, the productivity of the work site can be improved.

### <Second Embodiment>

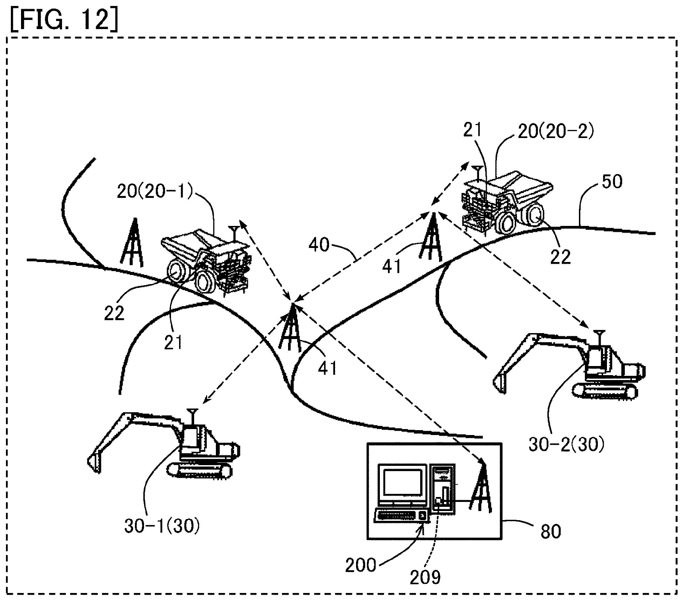

An autonomous travel system according to a second embodiment of the present invention will be described with reference to FIG. 12 to FIG. 14. It should be noted that the same or equivalent configurations as those described in the first embodiment are denoted by the same reference numerals, and differences will be mainly described. In the second embodiment, an example of generating an avoidance route in a control station 80 for controlling the traffic of a plurality of unmanned vehicles 20 and a plurality of mining machines 30 that perform work at a work site will be described. The autonomous travel system according to the second embodiment includes a control server 200 of the control station 80.

FIG. 12 is a schematic view for depicting a work site of an open-pit mine, and depicts the control station 80 including the autonomous travel system according to the second embodiment. The control station 80 depicted in FIG. 12 is provided in the vicinity of the work site or at a place far from the work site. The control station 80 is provided with the control server 200 and a communication device 209. The control server 200 aggregates operation information on one or more unmanned vehicles 20 and one or more mining machines 30 via the communication device 209 and the wireless communication line 40, and transmits a control signal to the plurality of unmanned vehicles 20 on the basis of the aggregated operation information. Accordingly, the control station 80 improves the productivity of the mine. It should be noted that in the drawing, the respective mining machines 30 are depicted as 30-1, 30-2, and the like.

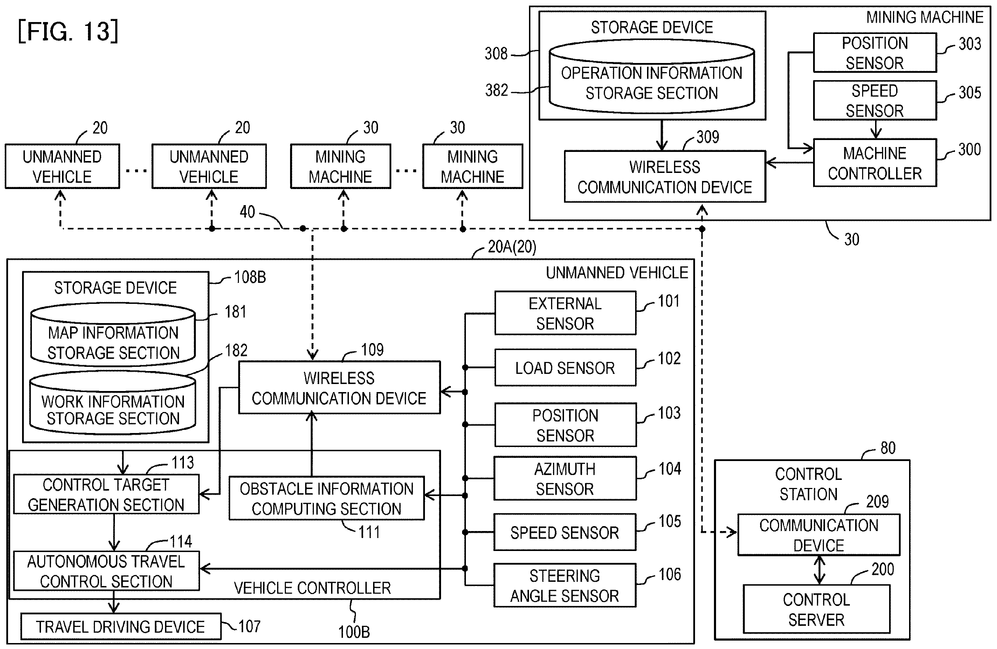

FIG. 13 is a diagram for depicting configurations of the unmanned vehicle 20, the mining machine 30, and the control station 80. As similar to the vehicle controller 100 described in the first embodiment, the control server 200 depicted in FIG. 13 is configured with a computer including a processing device, a volatile memory, a nonvolatile memory, an input/output interface, and other peripheral circuits. In addition, the communication device 209 has a communication interface capable of communicating with the wireless communication line 40.

The mining machine 30 includes a machine controller 300, a wireless communication device 309, a storage device 308, a position sensor 303, and a speed sensor 305. As similar to the vehicle controller 100, the machine controller 300 is configured with a computer including a processing device, a volatile memory, a nonvolatile memory, an input/output interface, and other peripheral circuits. In addition, the wireless communication device 309 has a configuration similar to the wireless communication device 109, and has a communication interface capable of communicating with the wireless communication line 40.

The control station 80, the unmanned vehicle 20, and the mining machine 30 exchange information with each other via the wireless communication line 40. The same information as the map information stored in a storage device 108B of each unmanned vehicle 20 is stored in a storage device of the control server 200.

The storage device 108B of the unmanned vehicle 20 has a work information storage section 182. A time and a travelling priority (work priority) of the unmanned vehicle 20 are stored in the work information storage section 182 in association with each other. The storage device 308 of the mining machine 30 has an operation information storage section 382. A time and an operation state of the mining machine 30 are stored in the operation information storage section 382 in association with each other. The operation information includes a "loading state" indicating an operation state in which the mining machine 30 is performing loading work for the unmanned vehicle 20, and a "standby state" indicating an operation state in which the mining machine 30 is not performing loading work for the unmanned vehicle 20.

A vehicle controller 100B of the unmanned vehicle 20 repeatedly computes the travelling priority in a predetermined control cycle, and stores the computed travelling priority together with the time in the storage device 108B. The vehicle controller 100B computes a travelling priority α by, for example, adding up priority parameters α1, a2, α3, and α4 to be described later (α = α1 + α2 + α3 + α4).

The vehicle controller 100B determines, for example, whether or not each of the following (first condition) to (fourth condition) is satisfied.

(First condition) The load state of the own vehicle 20A is the empty state, and the mining machine 30 that performs work at the end point (destination) of the travel route 11 in the empty state of the own vehicle 20A is in the standby state.

(Second condition) The travelling operation of the own vehicle 20A is operated by an operator (that is, the autonomous travel function is canceled and the own vehicle 20A is in a state of operating as a manned vehicle).

(Third condition) The load state of the own vehicle 20A is the loaded state.

(Fourth condition) There is an upward gradient within the acceleration distance Da from the obstacle 90 on the back side of the obstacle 90 as viewed from the own vehicle 20A.

The vehicle controller 100B sets α10 (for example, 0) to the priority parameter α1 when the (first condition) is not satisfied, and sets α11 to the priority parameter α1 when the (first condition) is satisfied. α11 is larger than α10. The vehicle controller 100B sets α20 (for example, 0) to the priority parameter α2 when the (second condition) is not satisfied, and sets α21 to the priority parameter α2 when the (second condition) is satisfied. α21 is larger than α20. The vehicle controller 100B sets α30 (for example, 0) to the priority parameter α3 when the (third condition) is not satisfied, and sets α31 to the priority parameter α3 when the (third condition) is satisfied. α31 is larger than α30. The vehicle controller 100B sets α40 (for example, 0) to the priority parameter α4 when the (fourth condition) is not satisfied, and sets α41 to the priority parameter α4 when the (fourth condition) is satisfied. α41 is larger than α40. It should be noted that α11, α21, α31, and α41 may be the same value or different values.

The control server 200 is provided with a function similar to the avoidance route generation section 112 of the vehicle controller 100 according to the first embodiment. That is, the control server 200 can be said to be an avoidance route generation device for generating an avoidance route.

When detecting the obstacle 90, the vehicle controller 100 of the unmanned vehicle 20 computes obstacle information and transmits the computation result to the control station 80 via the wireless communication line 40. The control server 200 decides an avoidance area on the basis of the received obstacle information and the operation information on the other unmanned vehicle 20 and the mining machine 30. The control server 200 generates an avoidance route corresponding to the avoidance area, and transmits information on the generated avoidance route to the unmanned vehicle 20, which has detected the obstacle 90, via the wireless communication line 40. Hereinafter, the unmanned vehicle 20 for which the avoidance route is to be generated is also referred to as a target vehicle. Since the target vehicle corresponds to the own vehicle 20A in the first embodiment, the same reference number is attached. In addition, as similar to the first embodiment, an unmanned vehicle 20 that advances in a direction opposite to the advancing direction of the target vehicle 20A is referred to as an oncoming vehicle 20B.

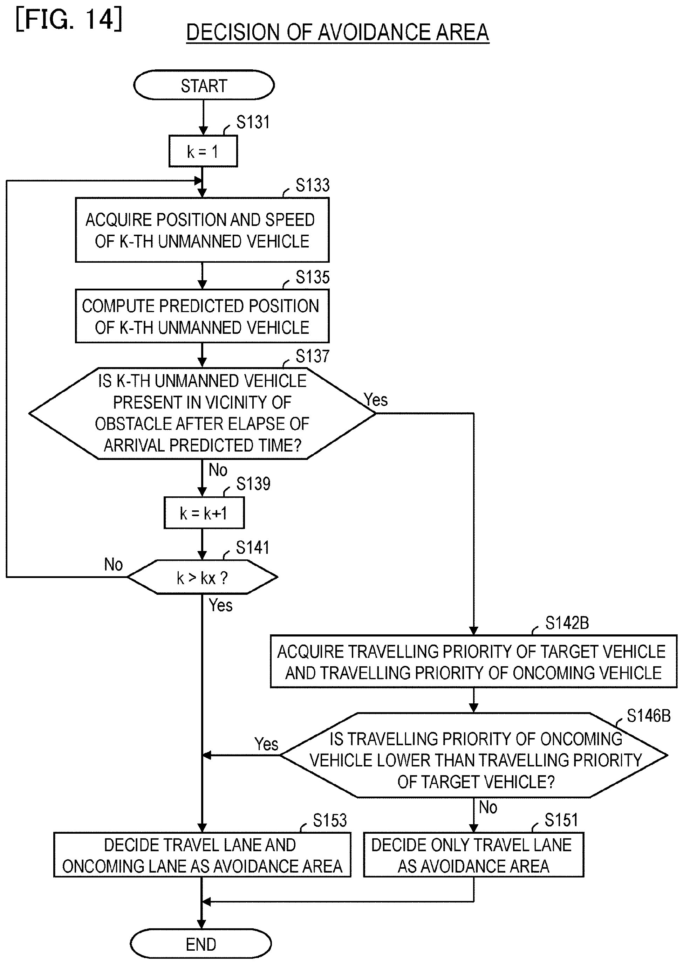

FIG. 14 is a diagram similar to FIG. 8 and is a flowchart for depicting an example of a flow of decision processing of an avoidance area executed by the control server 200 according to the second embodiment. In the flowchart of FIG. 14, processing of Steps S142B and S146B is executed instead of the processing of Steps S143 to S149 in the flowchart of FIG. 8.

In Step S142B, the control server 200 acquires a travelling priority αA of the target vehicle 20A and a travelling priority αB of the oncoming vehicle 20B, and advances the processing to Step S146B.

In Step S146B, the control server 200 determines whether or not the travelling priority αB of the oncoming vehicle 20B is lower than the travelling priority αA of the target vehicle 20A on the basis of the travelling priorities αA and αB of the target vehicle 20A and the oncoming vehicle 20B acquired in Step S142B. In Step S146B, where it is determined that the travelling priority αB of the oncoming vehicle 20B is higher than the travelling priority αA of the target vehicle 20A, the processing proceeds to Step S151. In this case, the target vehicle 20A is decelerated or stopped, and the travel of the oncoming vehicle 20B is given priority. In Step S146B, where it is determined that the travelling priority αB of the oncoming vehicle 20B is lower than the travelling priority αA of the target vehicle 20A, the processing proceeds to Step S153. In this case, the oncoming vehicle 20B is decelerated or stopped, and the travel of the target vehicle 20A is given priority.

As described above, the vehicle controller 100B configuring the autonomous travel system according to the second embodiment acquires information on the operation state of the mining machine 30 that loads an object to be loaded into the own vehicle 20A. The vehicle controller 100B determines whether the load state of the own vehicle 20A is the empty state or the loaded state. Where the first condition including that the operation state of the mining machine 30 is the standby state in which loading work is not being performed and the load state of the own vehicle 20A is the empty state is satisfied, the vehicle controller 100B sets the travelling priority of the own vehicle 20A higher than that that in a case where the first condition is not satisfied (α1 = α11 > α10).

Where the mining machine 30 is in the loading state, it waits for a while even after the own vehicle 20A arrives at the loading place. On the other hand, where the mining machine 30 is in the standby state, the loading work to the own vehicle 20A is started as soon as the own vehicle 20A arrives at the loading place. Thus, according to the above configuration, the productivity at the entire work site can be improved by shortening a period of time in which the mining machine 30 is in the standby state.

The vehicle controller 100B determines whether the own vehicle 20A is a manned vehicle or an unmanned vehicle. The autonomous travel function can be cancelled (disabled) by switching switches outside the unmanned vehicle 20 and inside the operation room of the unmanned vehicle 20. Where it is determined that the own vehicle 20A is a manned vehicle, the vehicle controller 100B sets the travelling priority of the own vehicle 20A higher than that in a case where it is determined that the own vehicle 20A is an unmanned vehicle (α2 = α21 > α20).

Accordingly, it is possible to reduce the operation burden of the operator because the opportunities of deceleration and stop of the manned vehicle can be reduced.

### <Modified example of second embodiment>

In the second embodiment, an example in which the vehicle controller 100B of the unmanned vehicle 20 computes the travelling priority α has been described. However, the computation of the travelling priority α may be performed by the control server 200. In this case, the control server 200 acquires operation information on the unmanned vehicle 20 from each unmanned vehicle 20, and computes the travelling priority α on the basis of the acquired operation information. The control server 200 determines whether the travelling priority αA of the target vehicle 20A is higher or lower than the travelling priority αB of the oncoming vehicle 20B on the basis of the travelling priority α acquired from each unmanned vehicle 20.

The following modified examples are also within the scope of the present invention, and it is possible to combine configurations depicted in the modified examples with the configurations described in the above embodiments, to combine the configurations described in the above different embodiments with each other, or to combine the configurations described in the following different modified examples with each other.

### <Modified Example 1>

The configuration and order of processing executed by the vehicle controller 100 and the control server 200 can be appropriately changed. For example, the processing of Steps S143 to S149 in FIG. 8 and Steps S142B and S146B in FIG. 14 may be omitted. In addition, only the processing of Steps S143 to S145 in FIG. 8 or only the processing of Steps S147 and S149 may be omitted.

### <Modified Example 2>

In the second embodiment, an example in which the travelling priority is computed by adding up the priority parameters set on the basis of whether or not the (first condition) to (fourth condition) are satisfied. However, the computing method of the travelling priority is not limited to this. The travelling priority may be computed on the basis of whether or not at least one of the conditions among the (first condition) to (fourth condition) is satisfied.

Although the embodiments of the present invention have been described above, the above-described embodiments depict only a part of an application example of the present invention, and are not intended to limit the technical scope of the present invention to the specific configurations of the above-described embodiments.

### Description of Reference Characters

10: travel lane
11: travel route
12: node
20: unmanned vehicle (conveyance vehicle, dump truck)
20A: own vehicle, target vehicle (unmanned vehicle)
20B: oncoming vehicle, the other vehicle (unmanned vehicle)
21: vehicle body
22: wheel
30: mining machine
40: wireless communication line
50: conveyance path
51: travel lane
51L, 51R: lane forming line
52: oncoming lane
52L, 52R: lane forming line
80: control station
90: obstacle
91: rectangular parallelepiped
100, 100B: vehicle controller (controller)
101: external sensor
103: position sensor
104: azimuth sensor
105: speed sensor
106: steering angle sensor
107: travel driving device
108, 108B: storage device
109: wireless communication device
111: obstacle information computing section
112: avoidance route generation section
113: control target generation section
114: autonomous travel control section
181: map information storage section
182: work information storage section
200: control server (controller)
209: communication device
271: obstacle information computing section
300: machine controller
303: position sensor
305: speed sensor
308: storage device
309: wireless communication device
382: operation information storage section
Ta: arrival predicted time
Tb: first passage required time
Tc: second passage required time

## Claims

1. An autonomous travel system comprising a controller for controlling a conveyance vehicle that can autonomously travel along a travel route, wherein
the controller is configured
to compute an arrival predicted time that is a time required for the conveyance vehicle to arrive at a position of an obstacle, on a basis of the position of the obstacle, and a position and a travelling speed of the conveyance vehicle when the obstacle is positioned in a travel lane of the conveyance vehicle,
to compute a predicted position of another vehicle after the arrival predicted time elapses on a basis of a position and a travelling speed of the another vehicle present around the conveyance vehicle and the arrival predicted time,
to determine whether or not the another vehicle is present in a vicinity of the obstacle after the arrival predicted time elapses on a basis of the position of the obstacle and the predicted position of the another vehicle,
to set the travel lane as an avoidance area and not to set a lane adjacent to the travel lane as an avoidance area when it is determined that the another vehicle is present in the vicinity of the obstacle after the arrival predicted time elapses,
to set both the travel lane and the lane adjacent to the travel lane as an avoidance area when it is determined that the another vehicle is not present in the vicinity of the obstacle after the arrival predicted time elapses, and
to generate an avoidance route as the travel route for the conveyance vehicle to avoid the obstacle in the avoidance area on a basis of the position of the conveyance vehicle, the position of the obstacle, and the avoidance area.

2. The autonomous travel system according to claim 1,
wherein
the controller is configured to
determine whether or not the conveyance vehicle can pass a side of the obstacle without contacting the obstacle on a basis of the position of the obstacle, a lateral width of the obstacle, and the avoidance area,
determine whether or not the conveyance vehicle can pass above the obstacle without contacting the obstacle on a basis of the position of the obstacle, the lateral width and a height of the obstacle, and the avoidance area,
stop the conveyance vehicle before the obstacle as viewed from the conveyance vehicle when it is determined that the conveyance vehicle cannot pass both a side of and above the obstacle without contacting the obstacle,
generate a bypass route passing a side of the obstacle as a candidate of the avoidance route when it is determined that the conveyance vehicle can pass a side of the obstacle without contacting the obstacle, and
generate a straddling route straddling the obstacle as a candidate of the avoidance route when it is determined that the conveyance vehicle can pass above the obstacle without contacting the obstacle.

3. The autonomous travel system according to claim 2,
wherein
the controller is configured to
compute a first passage required time that is a time required for the conveyance vehicle to pass the bypass route and a second passage required time that is a time required for the conveyance vehicle to pass the straddling route, when both the bypass route and the straddling route are generated,
set the bypass route as the avoidance route when the first passage required time is shorter than the second passage required time, and
set the straddling route as the avoidance route when the second passage required time is shorter than the first passage required time.

4. The autonomous travel system according to claim 1,
wherein
the controller is configured
to determine whether travelling priority of the conveyance vehicle is higher or lower than travelling priority of the another vehicle,
to set the travel lane as an avoidance area and not to set the lane adjacent to the travel lane as an avoidance area when it is determined that the another vehicle is present in the vicinity of the obstacle after the arrival predicted time elapses and it is determined that the travelling priority of the conveyance vehicle is lower than the travelling priority of the another vehicle, and
to set both the travel lane and the lane adjacent to the travel lane as an avoidance area when it is determined that the another vehicle is present in the vicinity of the obstacle after the arrival predicted time elapses and it is determined that the travelling priority of the conveyance vehicle is higher than the travelling priority of the another vehicle.

5. The autonomous travel system according to claim 4,
wherein
the controller is configured to
determine that the travelling priority of the conveyance vehicle is higher than the travelling priority of the another vehicle when a loading amount of the conveyance vehicle is larger than a loading amount of the another vehicle.

6. The autonomous travel system according to claim 4,
wherein
the controller is configured to
acquire information on a gradient of the travel lane of the conveyance vehicle,
determine whether or not an upward gradient is present within a predetermined distance from the obstacle on a back side of the obstacle as viewed from the conveyance vehicle on a basis of the acquired information on the gradient, and
determine that the travelling priority of the conveyance vehicle is higher than the travelling priority of the another vehicle when it is determined that the upward gradient is present.

7. The autonomous travel system according to claim 4,
wherein
the controller is configured to
acquire information on an operation state of a mining machine for loading an object to be loaded into the conveyance vehicle,
determine whether a load state of the conveyance vehicle is an empty state or a loaded state, and
set the travelling priority of the conveyance vehicle higher than that in a case where a condition is not satisfied, when the condition including that the operation state of the mining machine is a standby state in which loading work is not performed and that the load state of the conveyance vehicle is the empty state is satisfied.

8. The autonomous travel system according to claim 4,
wherein
the controller is configured to
determine whether the conveyance vehicle is a manned vehicle or an unmanned vehicle, and
set the travelling priority of the conveyance vehicle higher than that in a case where it is determined that the conveyance vehicle is an unmanned vehicle, when it is determined that the conveyance vehicle is a manned vehicle.

9. The autonomous travel system according to claim 4,
wherein
the controller transmits, to the another vehicle, a control command for prohibiting intrusion into an area nearer the conveyance vehicle side relative to an end point of the avoidance route until the conveyance vehicle arrives at the end point of the avoidance route, when it is determined that the another vehicle is present in the vicinity of the obstacle after the arrival predicted time elapses and it is determined that the travelling priority of the conveyance vehicle is higher than the travelling priority of the another vehicle.

10. The autonomous travel system according to claim 3,
wherein
the controller is configured to
set a target value of the travelling speed of the conveyance vehicle in the straddling route to be smaller as the height of the obstacle is higher, and
set the target value of the travelling speed of the conveyance vehicle in the straddling route to be smaller as the lateral width of the obstacle is larger.
